# EUROPEAN PATENT APPLICATION

(11) **EP 3 319 327 A1**
(43) Date of publication of application: **09.05.2018**
(21) Application number: 16853453.5
(22) Date of filing: 27.09.2016
(51) Int. Cl.: H04N 21/4425, H04N 21/433

(54) **INFORMATION PROCESSING APPARATUS AND INFORMATION PROCESSING METHOD**

(30) Priority: 09.10.2015 JP 2015201344
(71) Applicant: Sony Corporation, Tokyo 108-0075 (JP)
(72) Inventor: KATSUMATA Mitsuru, Tokyo 108-0075 (JP); HIRABAYASHI Mitsuhiro, Tokyo 108-0075 (JP); HAMADA Toshiya, Tokyo 108-0075 (JP)
(74) Representative: D Young & Co LLP
(86) International application number: PCT/JP2016/078352
(87) International publication number: WO 2017/061299

(57) **Abstract**

The present disclosure relates to an information processing apparatus and an information processing method that can appropriately resume recovery of corrupted data of a file in an ISO Base media file format.

A setting unit sets recovery information indicating a state of recovery of corrupted data of a file in compliance with the ISO Base media file format. A recovery unit recovers the corrupted data based on the recovery information set by the setting unit. The present disclosure can be applied to, for example, a reception apparatus or the like that receives and records a file of broadcast data in a format such as an ISO Base media file format.

## Description

### [Technical Field]

The present disclosure relates to an information processing apparatus and an information processing method, and particularly, to an information processing apparatus and an information processing method that can appropriately resume recovery of corrupted data of a file in an ISO Base media file format.

### [Background Art]

Currently, in an MPEG (Moving Picture Experts Group phase) meeting, a method called Partial File Storage is investigated as a method of saving file data transmitted by UDP (User Datagram Protocol) or other protocols in which data of broadcasting or the like may be corrupted (for example, see NPL 1). The Partial File Storage is a method of encapsulating corrupted file data, in compliance with an ISO base media file format (ISO/IEC 14496-12).

### [Citation List]

### [Non Patent Literature]

[NPL 1]
INTERNATIONAL ORGANISATION FOR STANDARDISATION ORGANISATION INTERNATIONALE DE NORMALISATION ISO/IEC JTC1/SC29/WG11 CODING OF MOVING PICTURES AND AUDIO, ISO/IEC JTC1/SC29/WG11, MPEG 2015/N15478, June 2015

### [Summary]

### [Technical Problem]

In the file data saved by the Partial File Storage, corrupted data may be recovered after the saving. However, when the recovery is paused in the middle, a file recovery apparatus cannot recognize information related to the paused recovery at the resumption of recovery. Therefore, the file recovery apparatus may recover the recovered corrupted data again or may recover many times the corrupted data for which the recovery has failed.

The present disclosure has been made in view of the circumstances, and the present disclosure is designed to appropriately resume recovery of corrupted data of a file in an ISO Base media file format.

### [Solution to Problem]

An information processing apparatus of a first aspect of the present disclosure is an information processing apparatus including a setting unit that sets recovery information indicating a state of recovery of corrupted data of a file in compliance with an ISO Base media file format, and a recovery unit that recovers the corrupted data based on the recovery information set by the setting unit.

An information processing method of the first aspect of the present disclosure corresponds to the information processing apparatus of the first aspect of the present disclosure.

In the first aspect of the present disclosure, the recovery information indicating the state of the recovery of the corrupted data of the file in compliance with the ISO Base media file format is set, and the corrupted data is recovered based on the set recovery information.

An information processing apparatus of a second aspect of the present disclosure is an information processing apparatus including a reproduction unit that reproduces a file in compliance with an ISO Base media file format, the file provided with recovery information indicating a state of recovery of corrupted data of the file.

An information processing method of the second aspect of the present disclosure corresponds to the information processing apparatus of the second aspect of the present disclosure.

In the second aspect of the present disclosure, the file in compliance with the ISO Base media file format is reproduced, the file provided with the recovery information indicating the state of the recovery of the corrupted data of the file.

Note that the information processing apparatuses of the first and second aspects of the present disclosure can be realized by causing a computer to execute a program.

Furthermore, the program executed by the computer to realize the information processing apparatuses according to the first and second aspects of the present disclosure can be provided by transmitting the program through a transmission medium or by recording the program in a recording medium.

### [Advantageous Effects of Invention]

According to the first aspect of the present disclosure, the corrupted data can be recovered. Furthermore, according to the first aspect of the present disclosure, the recovery of the corrupted data of the file in the ISO Base media file format can be appropriately resumed.

According to the second aspect of the present disclosure, the file can be reproduced. Furthermore, according to the second aspect of the present disclosure, the file in the ISO Base media file format can be reproduced for appropriate resumption of the recovery of the corrupted data.

Note that the advantageous effects described here may not be limited, and the advantageous effects can be any advantageous effects described in the present disclosure.

### [Brief Description of Drawings]

[FIG. 1]

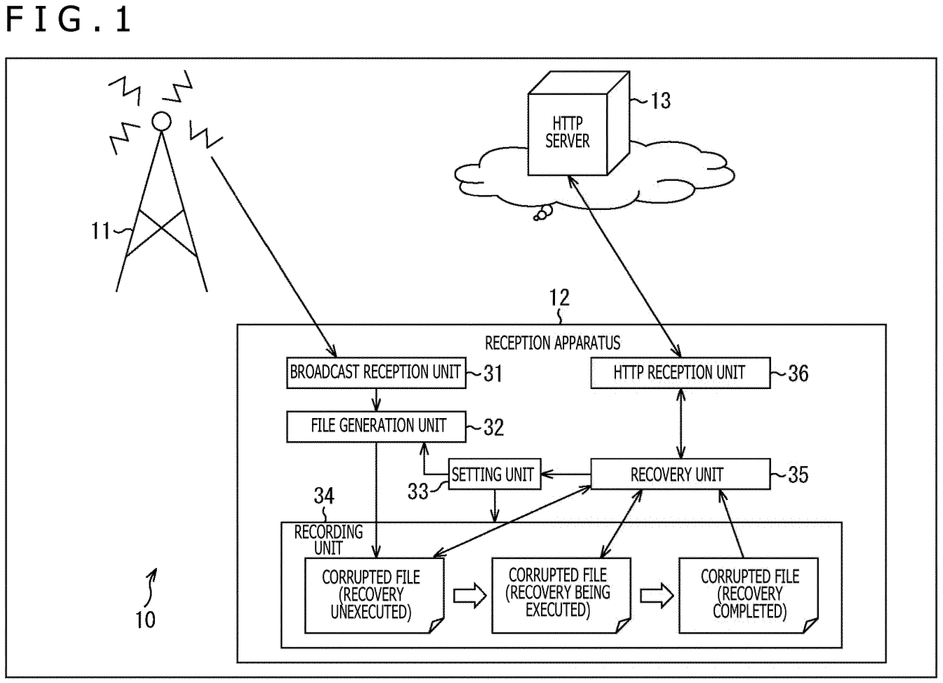

   FIG. 1 is a block diagram depicting a configuration example of a first embodiment of an information processing system according to the present disclosure.
[FIG. 2]

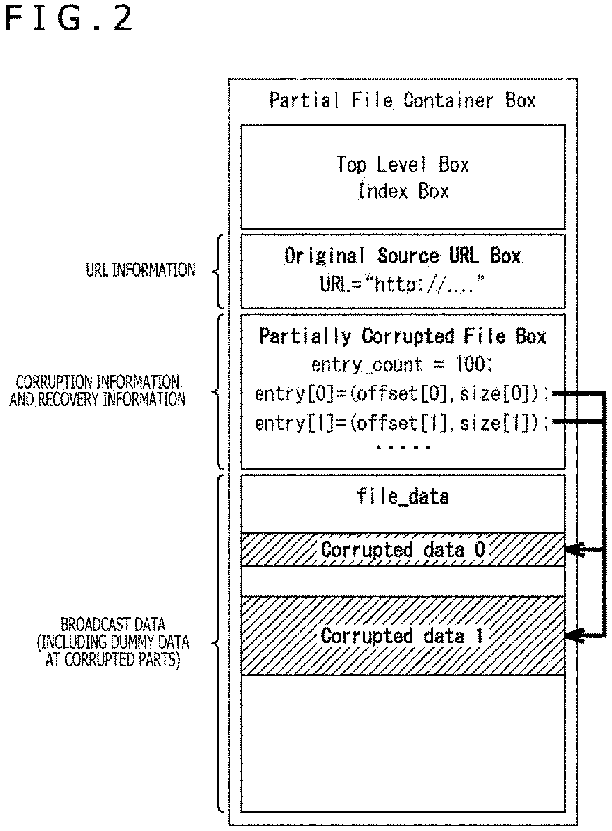

   FIG. 2 is a diagram depicting a first structure example of a corrupted file.
[FIG. 3]

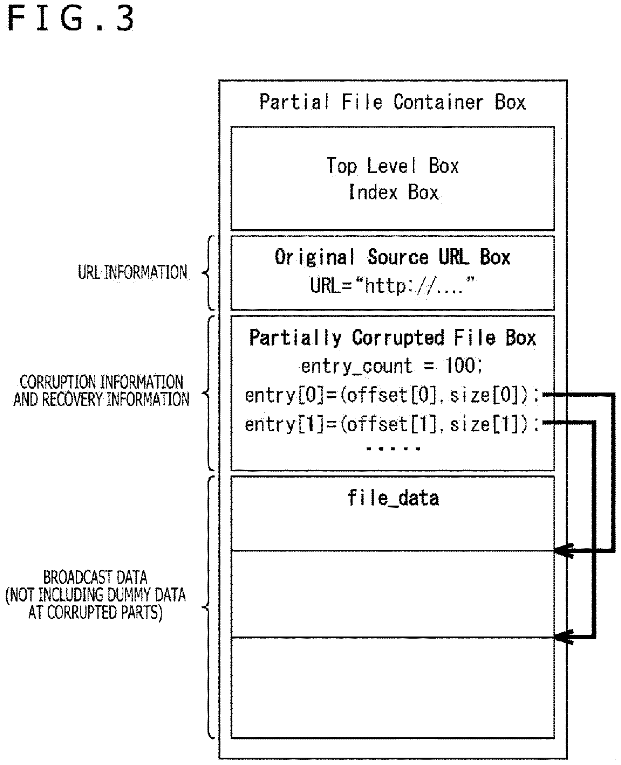

   FIG. 3 is a diagram depicting a second structure example of the corrupted file.
[FIG. 4]

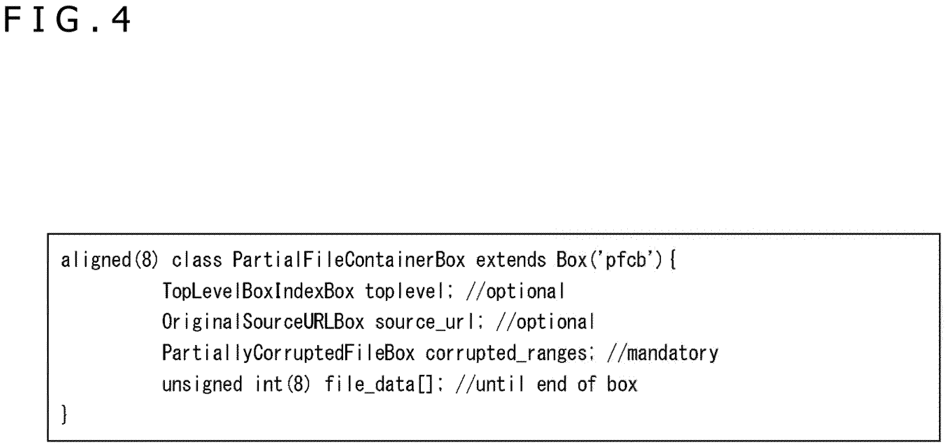

   FIG. 4 is a diagram depicting an example of syntax of Partial File Container Box of FIGS. 2 and 3.
[FIG. 5]

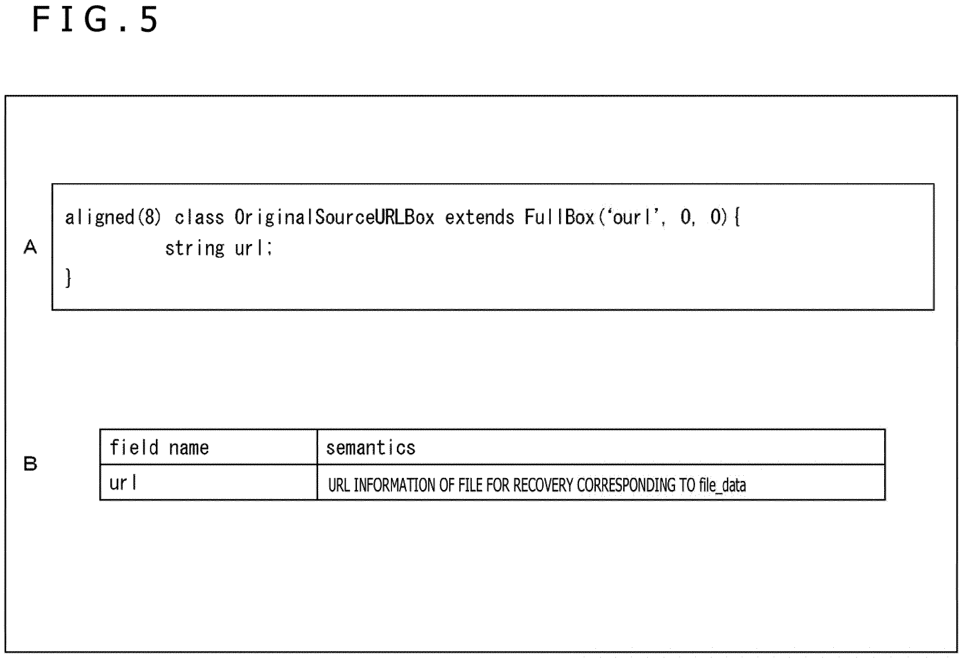

   FIG. 5 is a diagram depicting an example of syntax and semantics of Original Source URL Box of FIG. 4.
[FIG. 6]

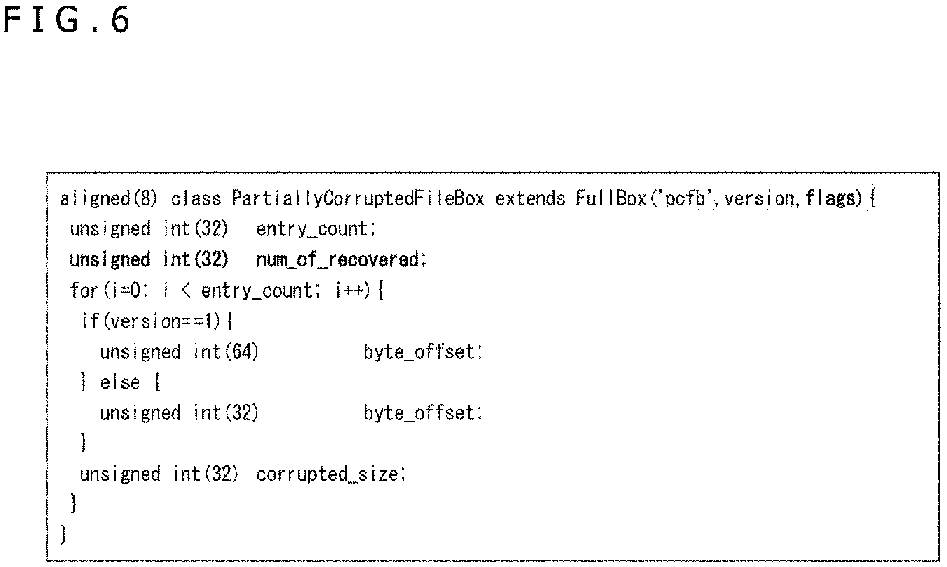

   FIG. 6 is a diagram depicting an example of syntax of Partially Corrupted File Box of FIG. 4.
[FIG. 7]

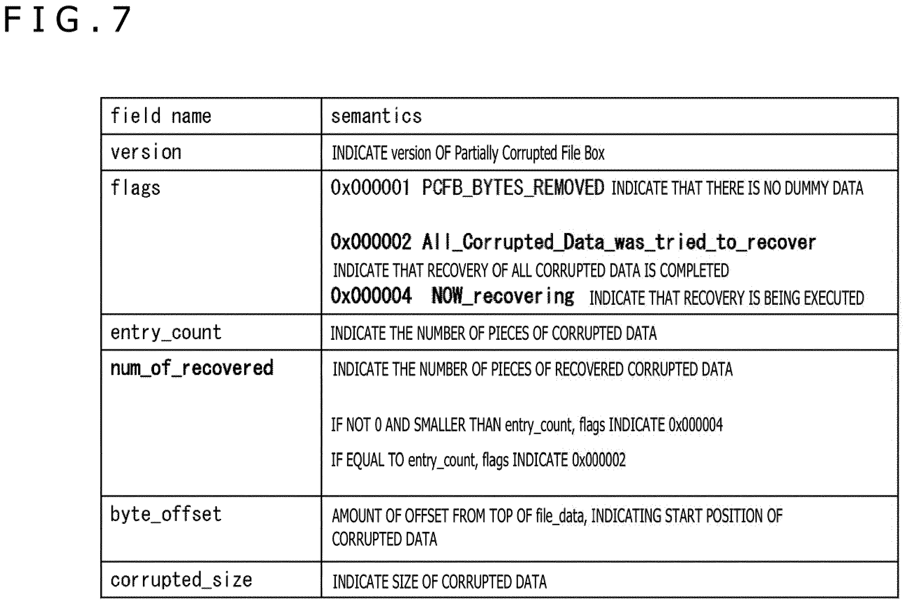

   FIG. 7 is a diagram depicting an example of semantics of the Partially Corrupted File Box of FIG. 4.
[FIG. 8]

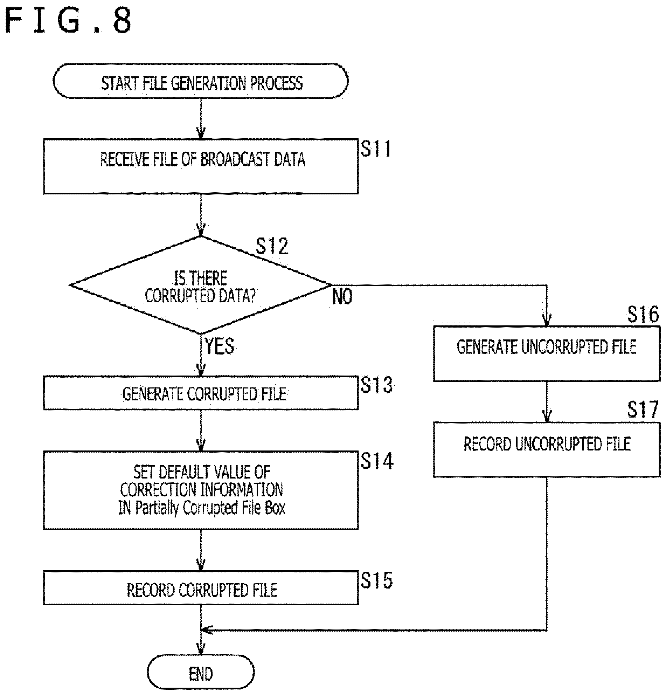

   FIG. 8 is a flow chart describing a file generation process by a reception apparatus of FIG. 1.
[FIG. 9]

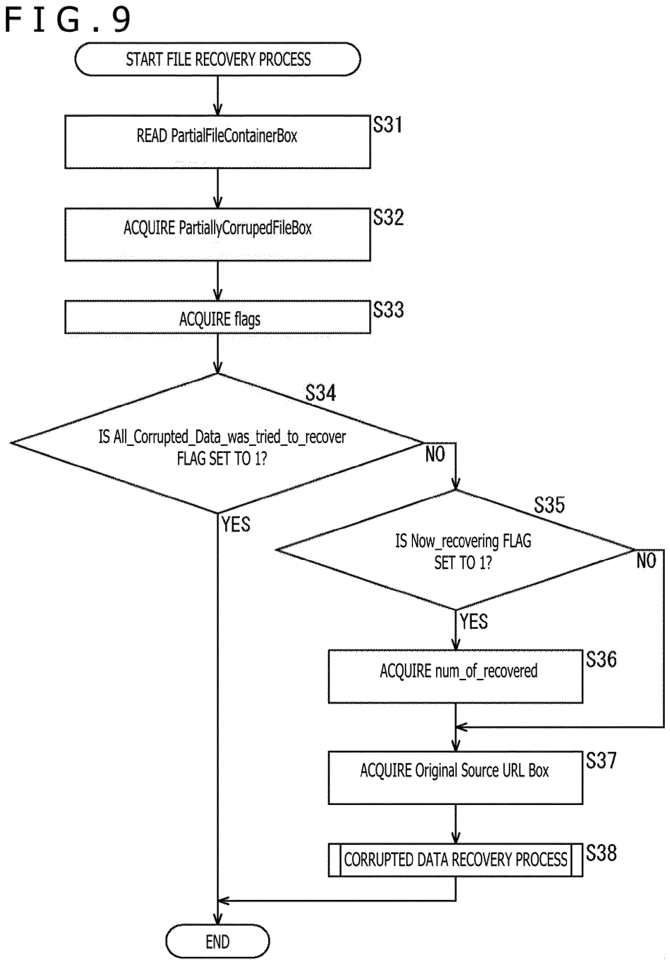

   FIG. 9 is a flow chart describing a file recovery process by the reception apparatus of FIG. 1.
[FIG. 10]

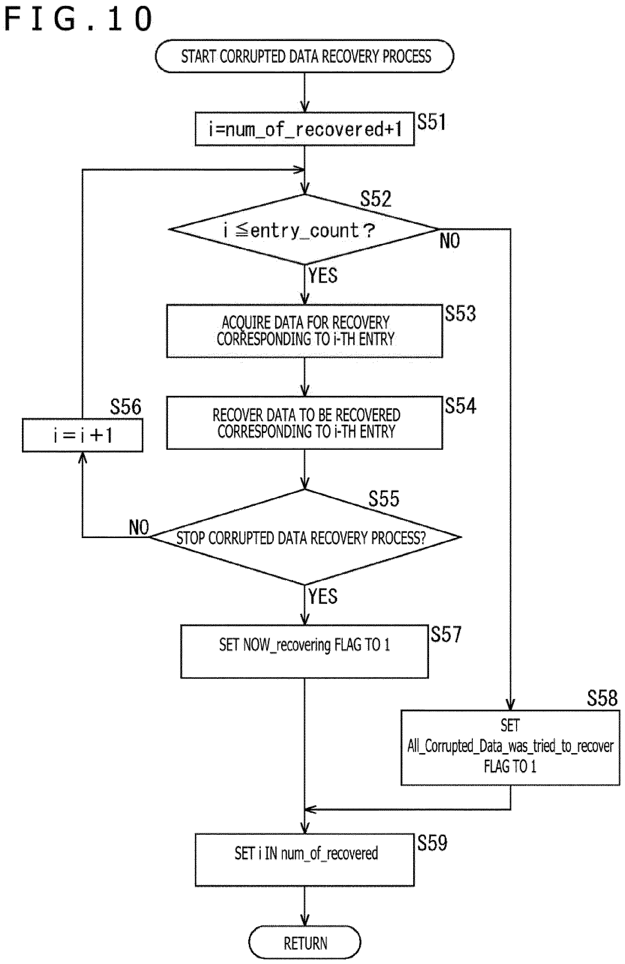

   FIG. 10 is a flow chart describing details of a corrupted data recovery process of FIG. 9.
[FIG. 11]

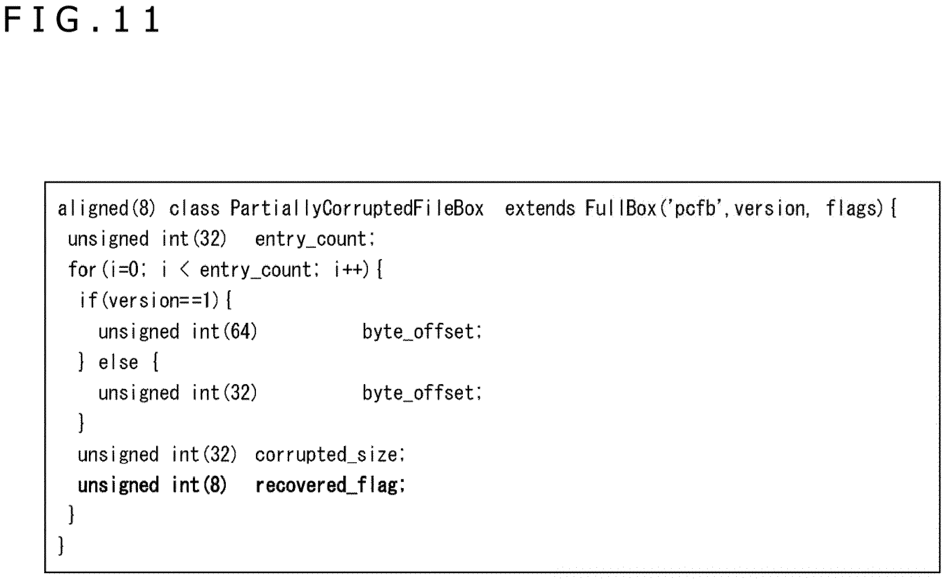

   FIG. 11 is a diagram depicting an example of syntax of Partially Corrupted File Box according to a second embodiment.
[FIG. 12]

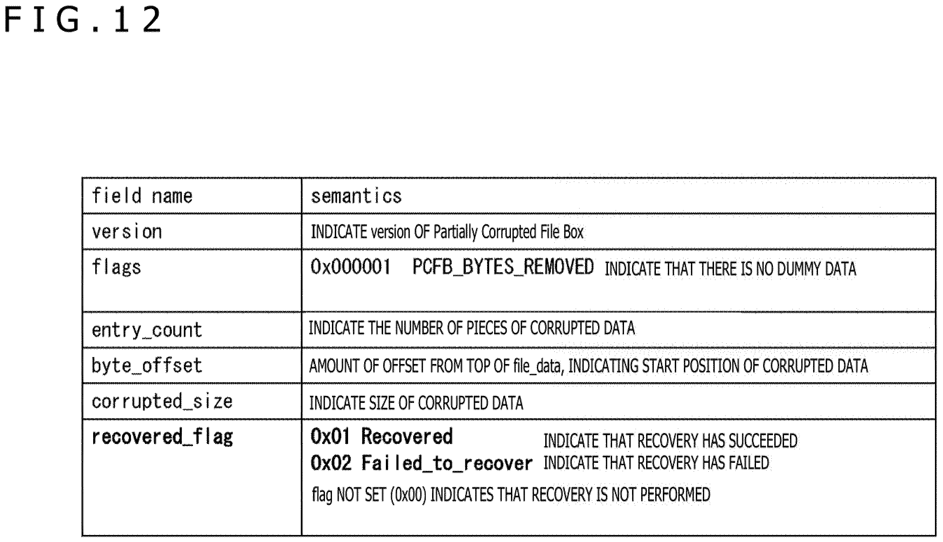

   FIG. 12 is a diagram depicting an example of semantics of the Partially Corrupted File Box according to the second embodiment.
[FIG. 13]

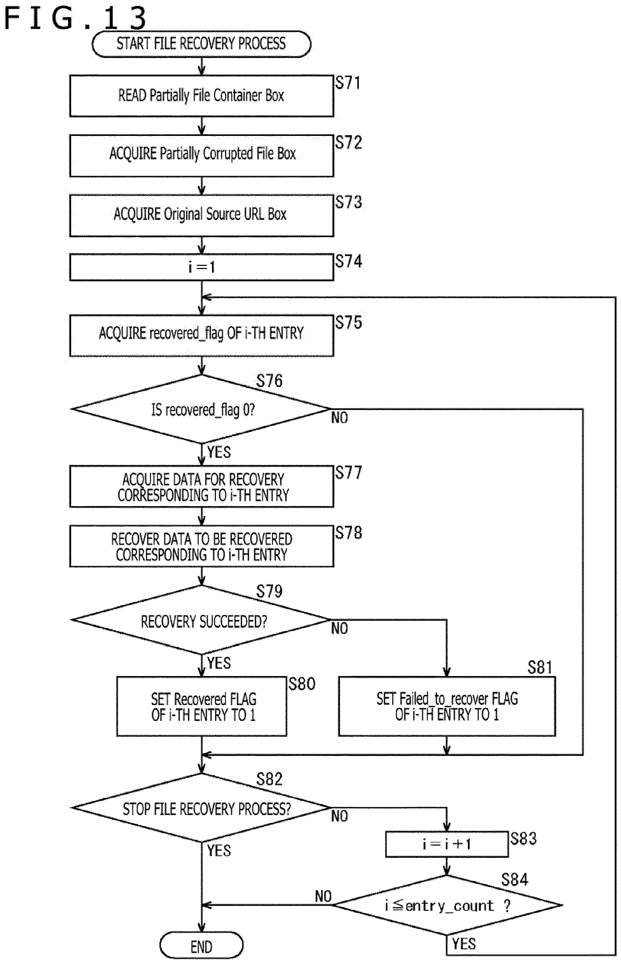

   FIG. 13 is a flow chart describing a file recovery process according to the second embodiment.
[FIG. 14]

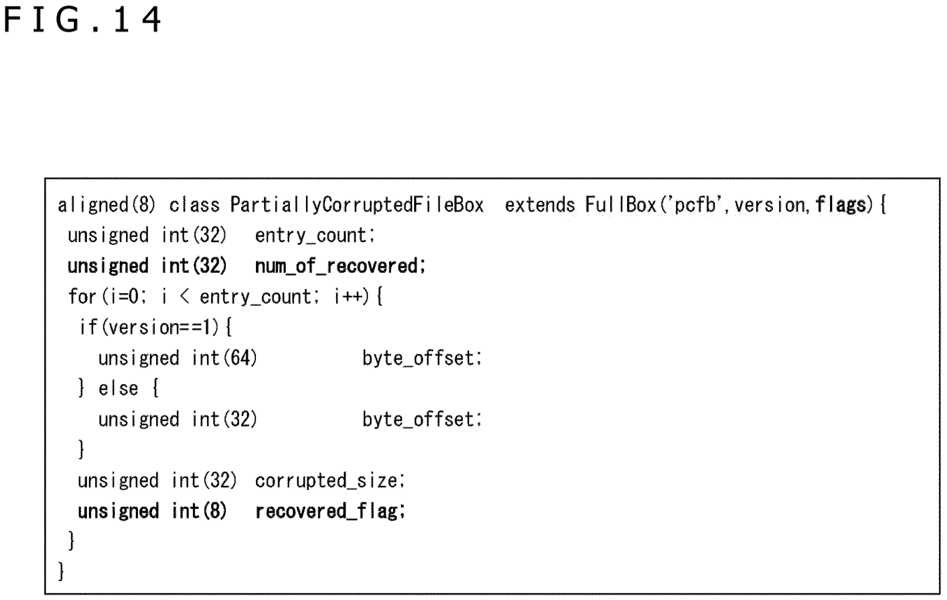

   FIG. 14 is a diagram depicting an example of syntax of Partially Corrupted File Box according to a third embodiment.
[FIG. 15]

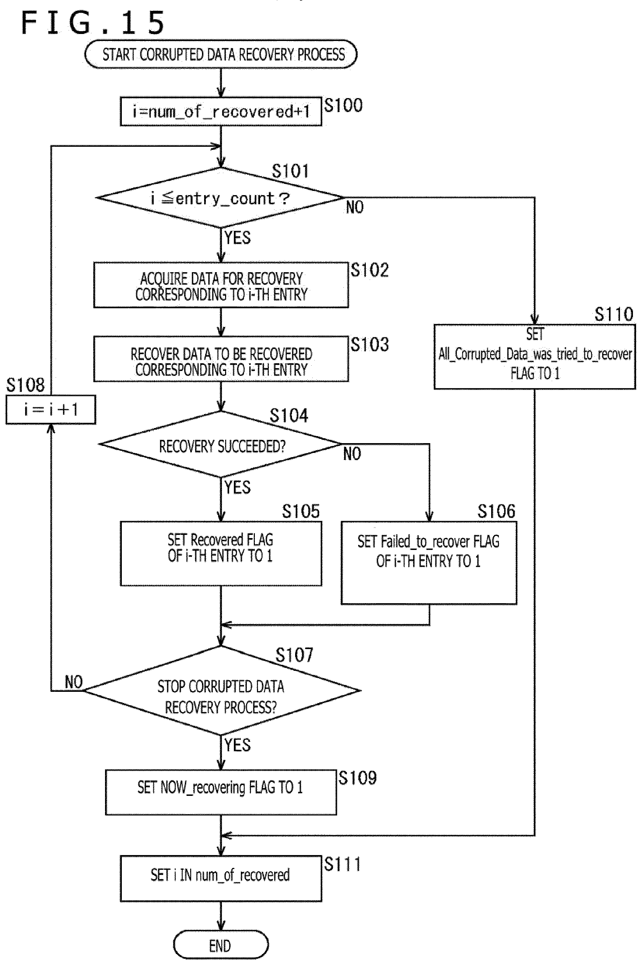

   FIG. 15 is a flow chart describing a corrupted data recovery process according to the third embodiment.
[FIG. 16]

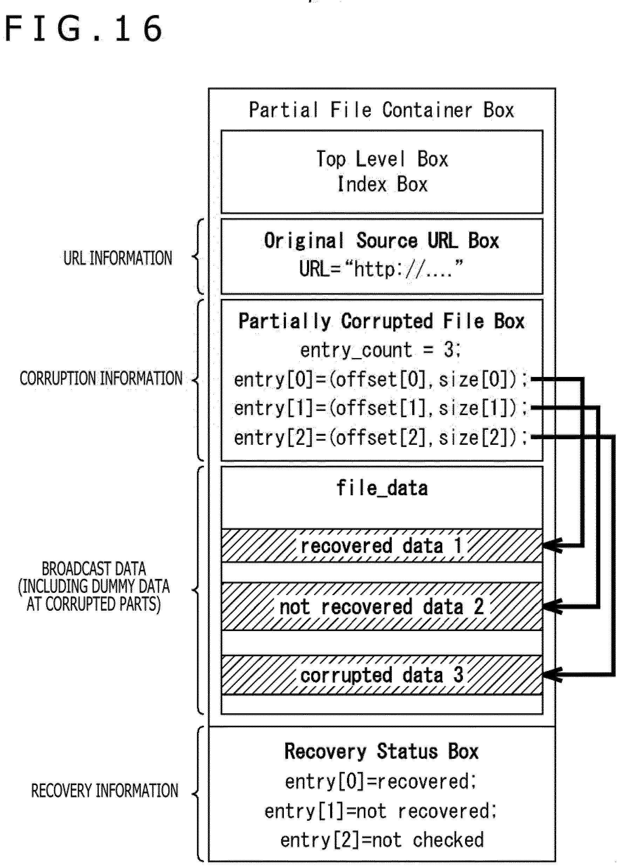

   FIG. 16 is a diagram depicting a first structure example of a corrupted file according to a fourth embodiment.
[FIG. 17]

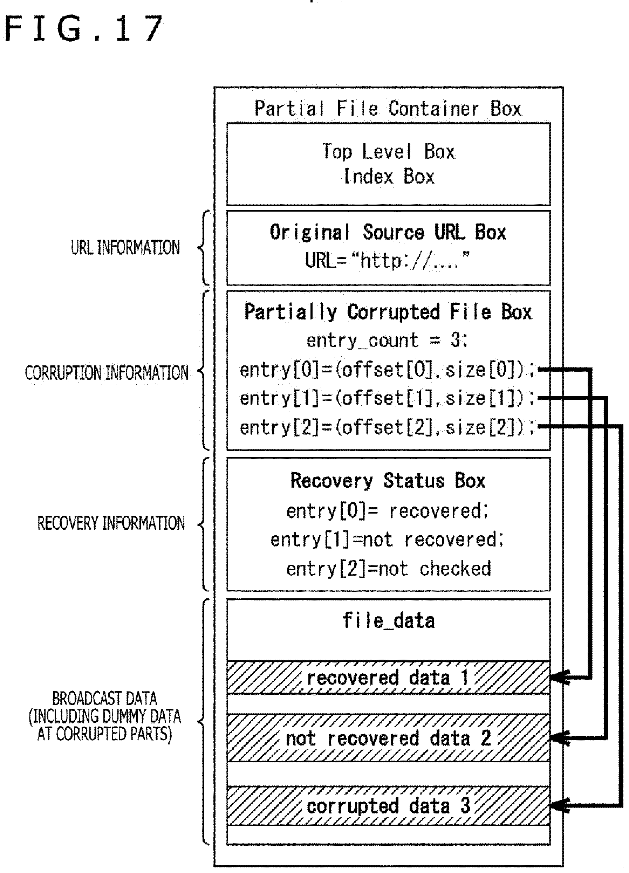

   FIG. 17 is a diagram depicting a second structure example of the corrupted file according to the fourth embodiment.
[FIG. 18]

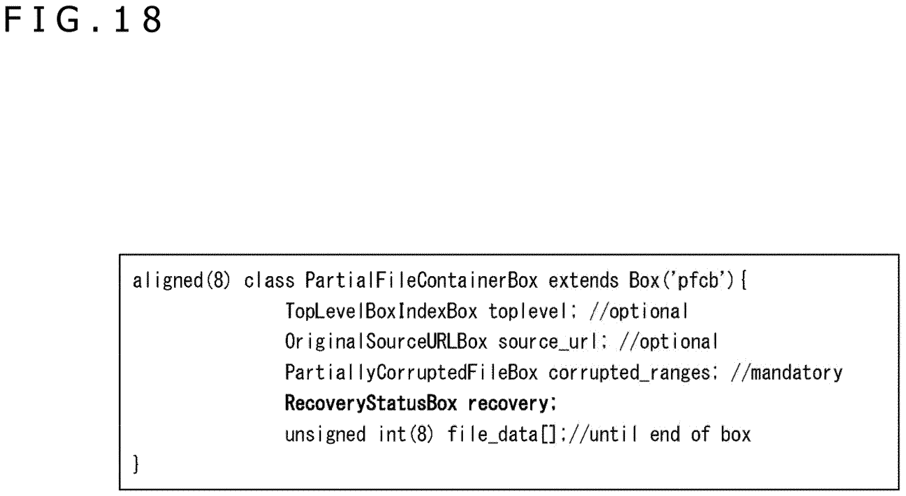

   FIG. 18 is a diagram depicting an example of syntax of Partial File Container Box of FIG. 17.
[FIG. 19]

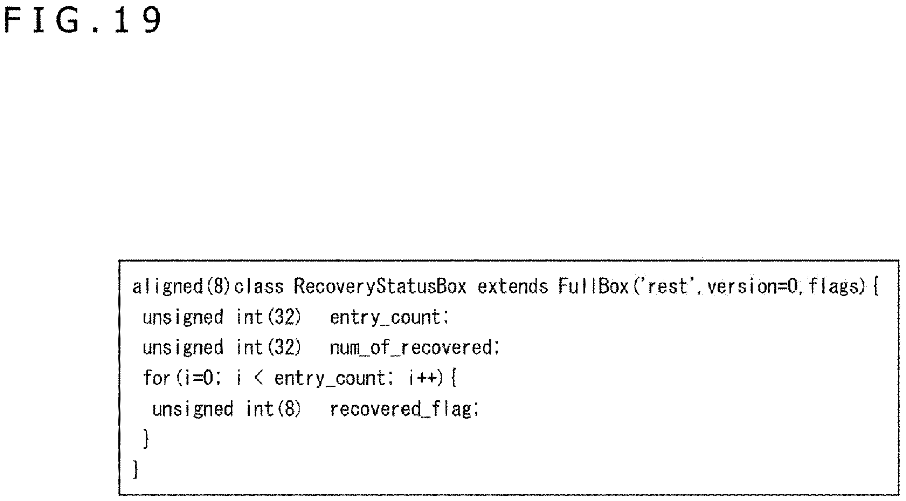

   FIG. 19 is a diagram depicting a first example of syntax of Recovery Status Box of FIGS. 16 and 17.
[FIG. 20]

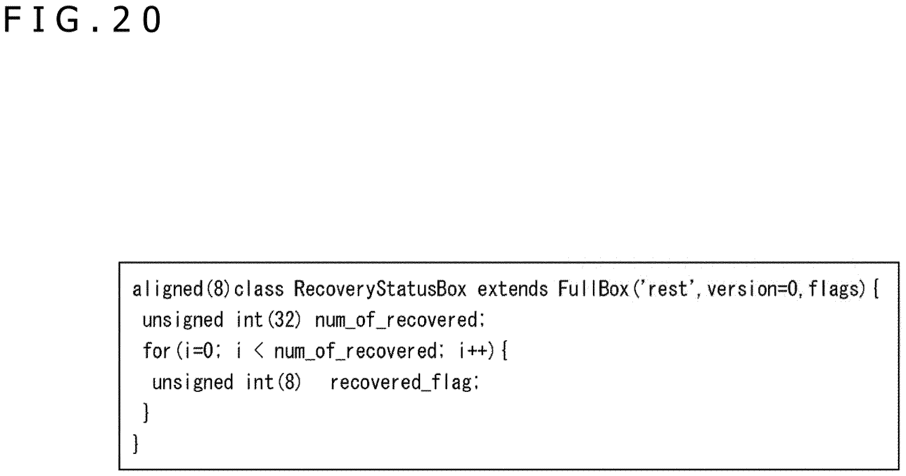

   FIG. 20 is a diagram depicting a second example of the syntax of the Recovery Status Box of FIGS. 16 and 17.
[FIG. 21]

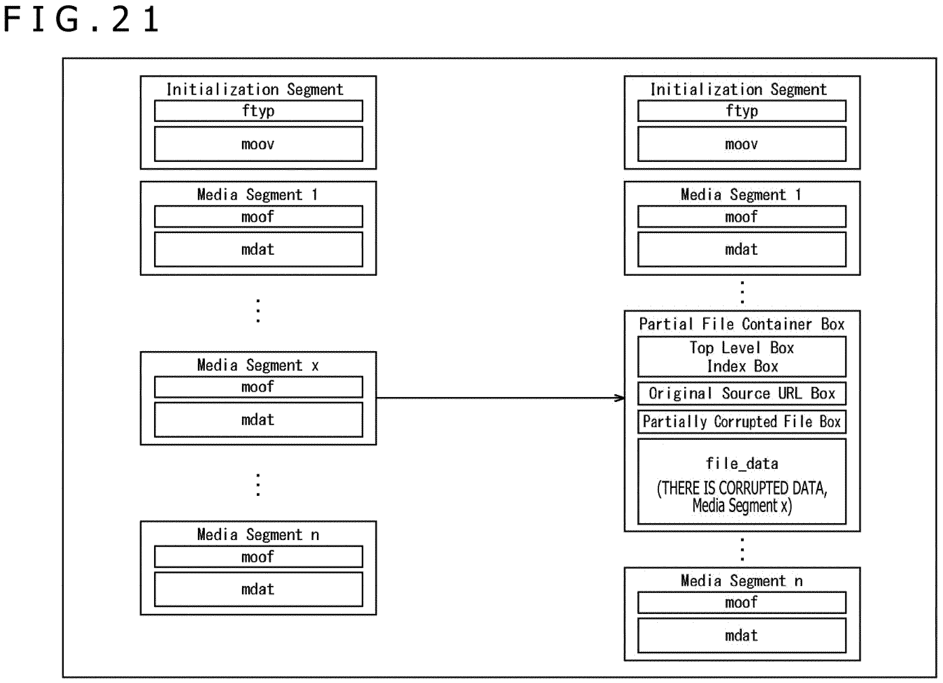

   FIG. 21 is a diagram describing a process by a file generation unit according to a fifth embodiment.
[FIG. 22]

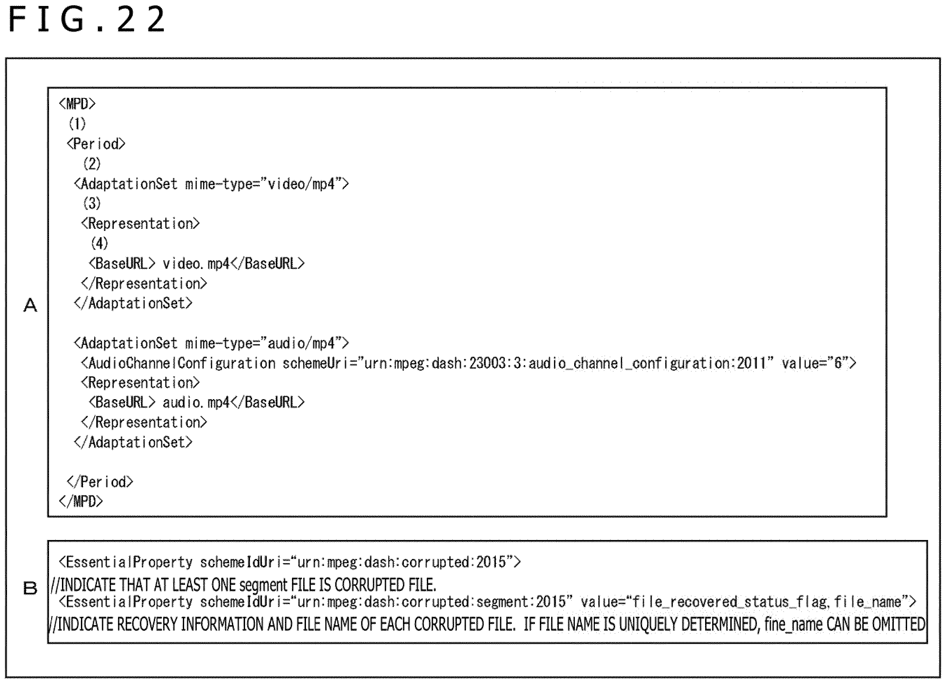

   FIG. 22 is a diagram depicting a first configuration example of an MPD file provided with corrupted file information and recovery information.
[FIG. 23]

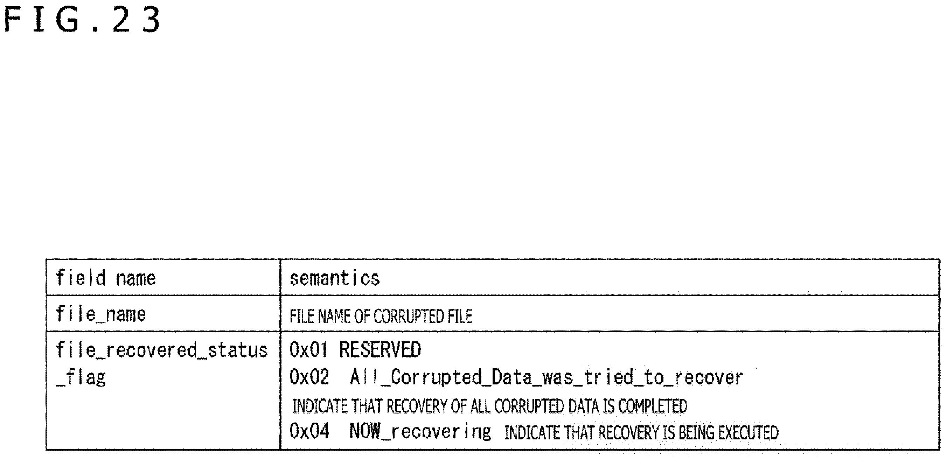

   FIG. 23 is a diagram depicting an example of semantics of file_name and file_recovered_status_flag.
[FIG. 24]

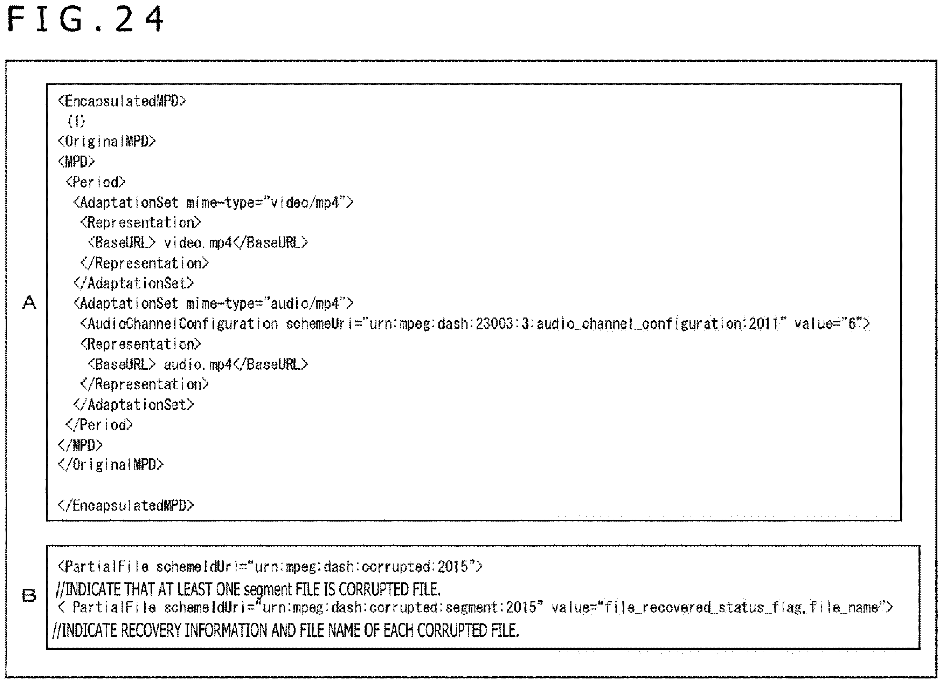

   FIG. 24 is a diagram depicting a second configuration example of the MPD file provided with the corrupted file information and the recovery information.
[FIG. 25]

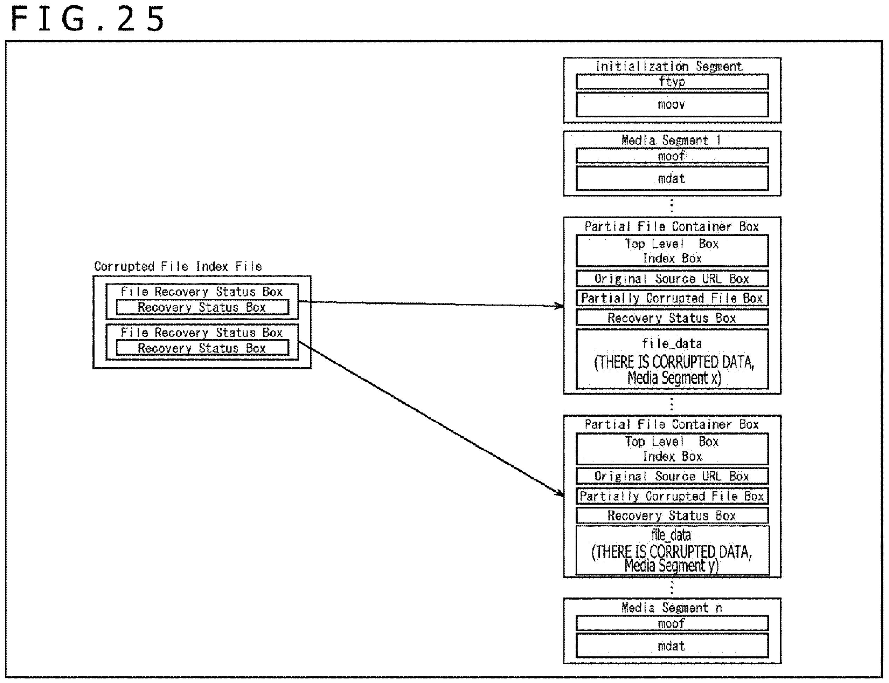

   FIG. 25 is a diagram describing a process by the file generation unit according to a sixth embodiment.
[FIG. 26]

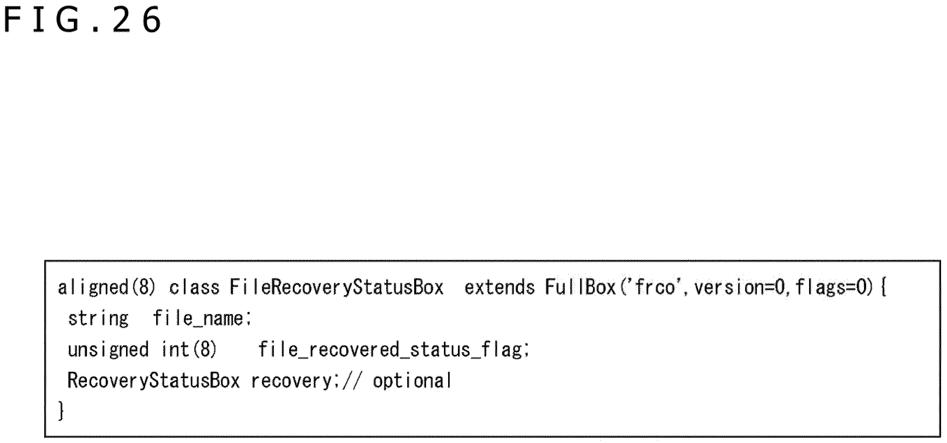

   FIG. 26 is a diagram depicting an example of syntax of File Recovery Status Box.
[FIG. 27]

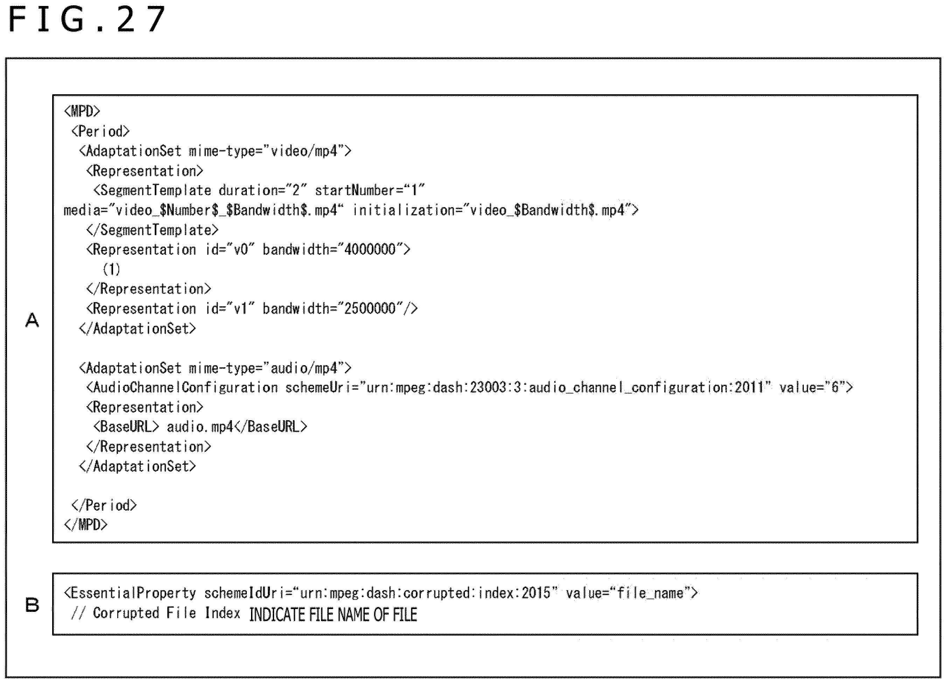

   FIG. 27 is a diagram depicting a configuration example of an MPD file provided with Corrupted File Index file information.
[FIG. 28]

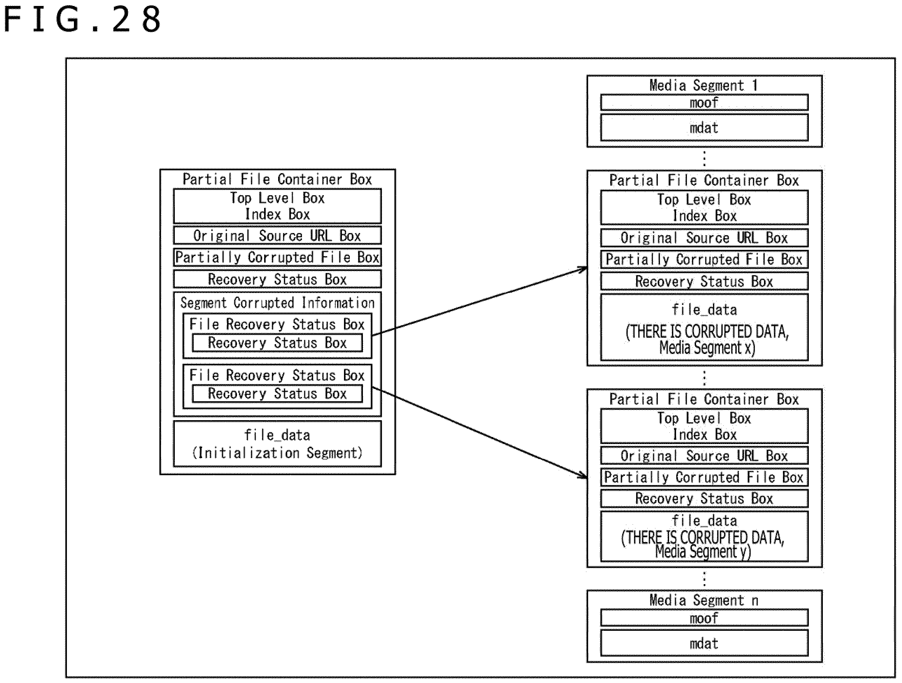

   FIG. 28 is a diagram describing a process by a file generation unit 32 according to a seventh embodiment.
[FIG. 29]

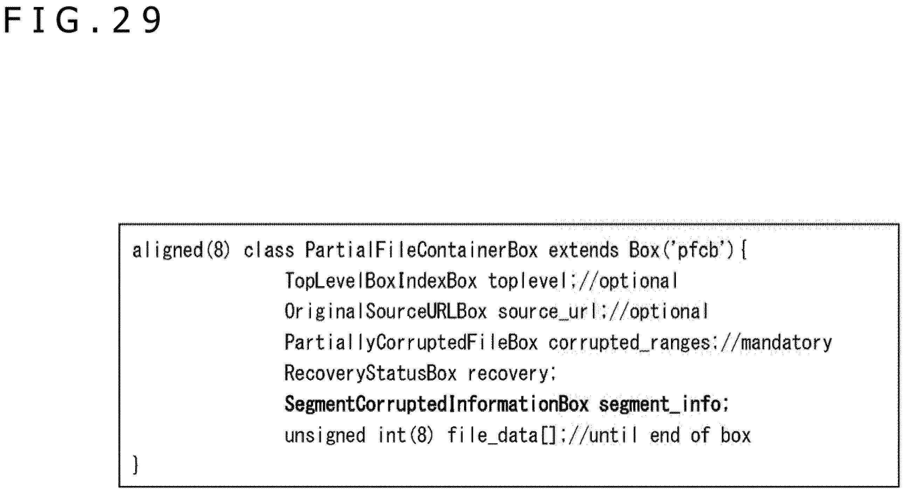

   FIG. 29 is a diagram depicting a configuration example of a corrupted Initialization Segment file.
[FIG. 30]

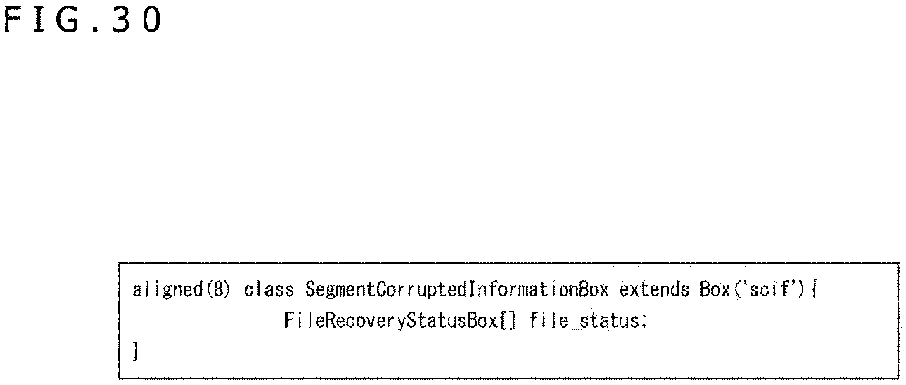

   FIG. 30 is a diagram depicting an example of syntax of Segment Corrupted Information Box.
[FIG. 31]

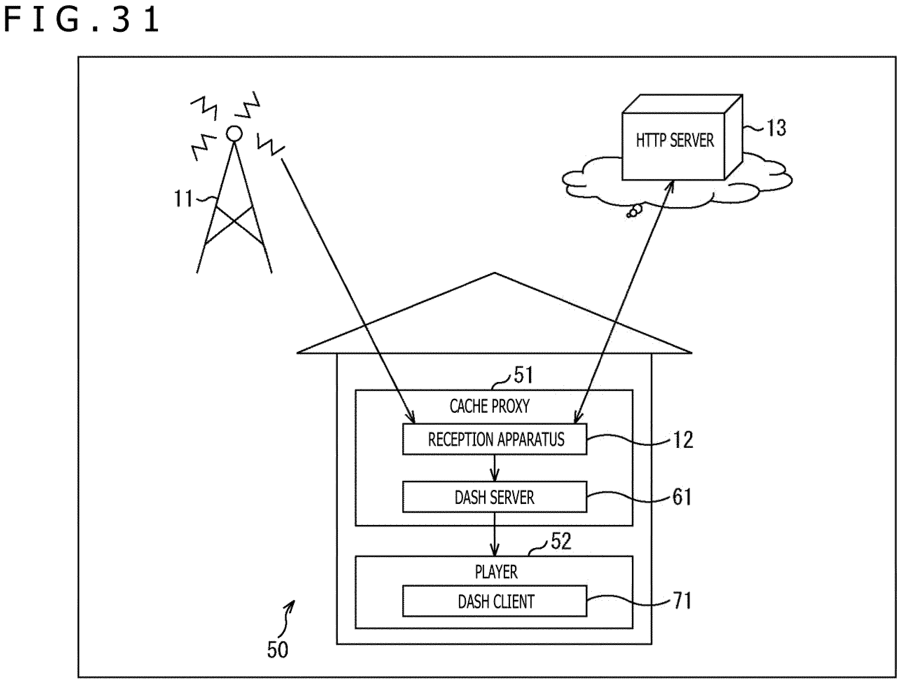

   FIG. 31 is a block diagram depicting a configuration example of an eighth embodiment of the information processing system according to the present disclosure.
[FIG. 32]

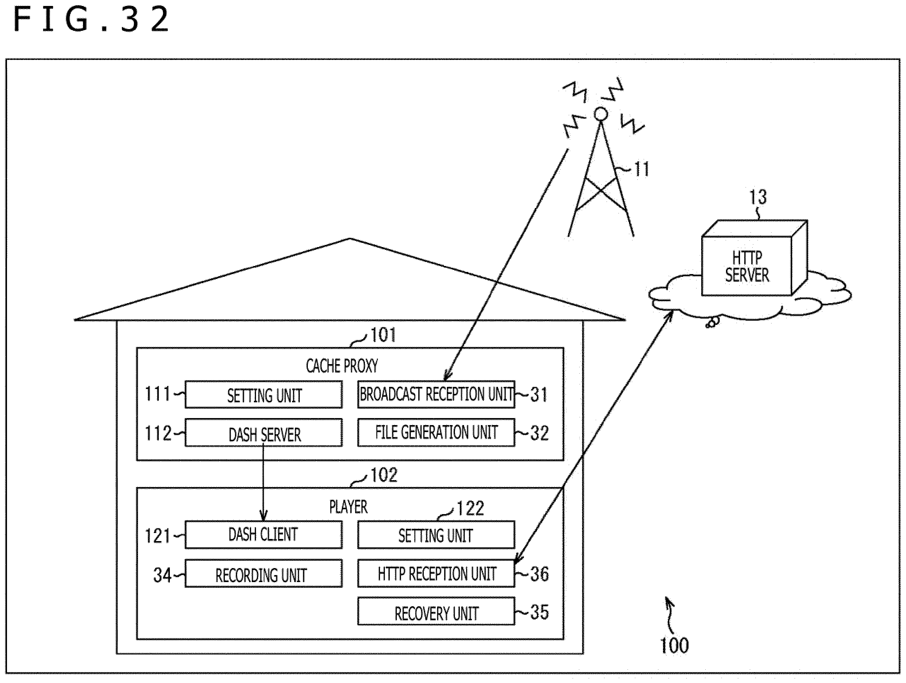

   FIG. 32 is a block diagram depicting a configuration example of a ninth embodiment of the information processing system according to the present disclosure.
[FIG. 33]

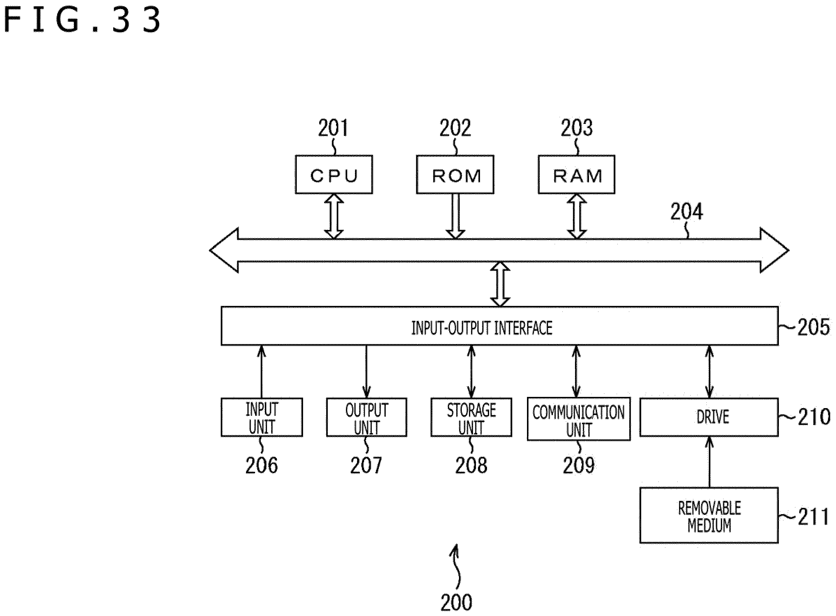

   FIG. 33 is a block diagram depicting a configuration example of hardware of a computer.

### [Description of Embodiments]

Hereinafter, modes (hereinafter, referred to as embodiments) for carrying out the present disclosure will be described. Note that the embodiments will be described in the following order.
1. First Embodiment: Information Processing System (FIGS. 1 to 10)
2. Second Embodiment: Information Processing System (FIGS. 11 to 13)
3. Third Embodiment: Information Processing System (FIGS. 14 and 15)
4. Fourth Embodiment: Information Processing System (FIGS. 16 to 20)
5. Fifth Embodiment: Information Processing System (FIGS. 21 to 24)
6. Sixth Embodiment: Information Processing System (FIGS. 25 to 27)
7. Seventh Embodiment: Information Processing System (FIGS. 28 to 30)
8. Eighth Embodiment: Information Processing System (FIG. 31)
9. Ninth Embodiment: Information Processing System (FIG. 32)
10. Tenth Embodiment: Computer (FIG. 33)

### <First Embodiment>

### (Configuration Example of First Embodiment of Information Processing System)

FIG. 1 is a block diagram depicting a configuration example of a first embodiment of an information processing system according to the present disclosure.

An information processing system 10 of FIG. 1 includes a broadcasting station 11, a reception apparatus 12 (information processing apparatus), and an HTTP (HyperText Transfer Protocol) server 13. In the information processing system 10, the reception apparatus 12 receives a file of broadcast data from the broadcasting station 11 and uses data acquired from the HTTP server 13 to recover corrupted data of the file of the broadcast data.

Specifically, the broadcasting station 11 of the information processing system 10 transmits a file of broadcast data encoded by an MPEG2 system or the like, the file in compliance with a format such as an ISO Base media file format, to the reception apparatus 12 through an antenna or the like not depicted.

The reception apparatus 12 includes a broadcast reception unit 31, a file generation unit 32, a setting unit 33, a recording unit 34, a recovery unit 35, and an HTTP reception unit 36.

The broadcast reception unit 31 of the reception apparatus 12 receives the file of the broadcast data transmitted from the broadcasting station 11 through an antenna or the like not depicted and supplies the file to the file generation unit 32.

The file generation unit 32 determines whether there is corrupted data in the file of the broadcast data supplied from the broadcast reception unit 31. If the file generation unit 32 determines that there is no corrupted data in the file of the broadcast data, the file generation unit 32 generates a file (hereinafter, referred to as uncorrupted file) in the ISO Base media file format from the broadcast data.

On the other hand, if the file generation unit 32 determines that there is corrupted data in the file of the broadcast data, the file generation unit 32 uses a method called Partial File Storage to generate a file (hereinafter, referred to as corrupted file) in compliance with the ISO Base media file format from the broadcast data. In the corrupted file, the setting unit 33 sets a default value of recovery information indicating a state of recovery of the corrupted data of the corrupted file. The file generation unit 32 supplies the uncorrupted file and the corrupted file provided with the default value of the recovery information to the recording unit 34.

The setting unit 33 sets the default value of the recovery information in the corrupted file generated by the file generation unit 32. The setting unit 33 also updates the recovery information set in the corrupted file recorded in the recording unit 34 based on recovered information indicating the number of pieces of recovered corrupted data supplied from the recovery unit 35.

The recording unit 34 records the uncorrupted file and the corrupted file supplied from the file generation unit 32.

The recovery unit 35 selects one of the corrupted files recorded in the recording unit 34 as a file to be recovered. The recovery unit 35 decides predetermined corrupted data as data to be recovered based on the recovery information included in the file to be recovered.

The recovery unit 35 acquires acquisition source information, such as URL (Uniform Resource Locator) information of a file without corrupted data (hereinafter, referred to as file for recovery) corresponding to the file of the broadcast data used to generate the file to be recovered, from the file to be recovered and supplies the acquisition source information to the HTTP reception unit 36. The recovery unit 35 recovers the corrupted data by using the file for recovery supplied from the HTTP reception unit 36 according to the supply of the acquisition source information. The recovery unit 35 supplies the recovered information to the setting unit 33.

The HTTP reception unit 36 communicates with the HTTP server 13 based on the acquisition source information supplied from the recovery unit 35 to acquire the file for recovery held by the HTTP server 13. The HTTP reception unit 36 supplies the acquired file for recovery to the recovery unit 35.

### (First Structure Example of Corrupted File)

FIG. 2 is a diagram depicting a first structure example of the corrupted file.

As depicted in FIG. 2, the corrupted file includes Partial File Container Box in a Box structure of the ISO base media file format. The file of the broadcast data including the corrupted data received by the broadcast reception unit 31 is encapsulated in the Partial File Container Box.

Specifically, the Partial File Container Box is the highest Box including Top Level Box Index Box, Original Source URL Box, Partially Corrupted File Box, and file_data.

Information indicating the position of the Box in a predetermined level is described in the Top Level Box Index Box. The URL information as the acquisition source information of the file for recovery is described in the Original Source URL Box. Corruption information indicating the position and the size of the corrupted data, the recovery information, and the like are described in the Partially Corrupted File Box. The file_data is broadcast data provided with dummy data at parts of the corrupted data (Corrupted data) of the file received by the broadcast reception unit 31. Therefore, the size of the file_data is the same as the size of the file that should be received by the broadcast reception unit 31.

### (Second Structure Example of Corrupted File)

FIG. 3 is a diagram depicting a second structure example of the corrupted file.

The structure of the corrupted file of FIG. 3 is the same as the structure of FIG. 2 except for the file_data. The file_data of FIG. 3 is broadcast data in which the dummy data is not arranged at the parts of the corrupted data of the file received by the broadcast reception unit 31, and the parts of the corrupted data are reduced.

### (Example of Syntax of Partial File Container Box)

FIG. 4 is a diagram depicting an example of syntax of the Partial File Container Box of FIGS. 2 and 3.

As depicted in FIG. 4, the Top Level Box Index Box and the Original Source URL Box of the Partial File Container Box are Boxes (Optional Boxes) that do not have to be arranged. The Partially Corrupted File Box is a Box (mandatory Box) that is always arranged.

### (Example of Syntax and Semantics of Original Source URL Box)

FIG. 5 is a diagram depicting an example of syntax and semantics of the Original Source URL Box. Specifically, A of FIG. 5 is a diagram depicting an example of syntax of the Original Source URL Box, and B of FIG. 5 is a diagram depicting an example of semantics.

As depicted in FIG. 5, the URL information (url) of the file for recovery corresponding to the file_data is described in the Original Source URL Box. The HTTP reception unit 36 of FIG. 1 acquires the recovery file from the HTTP server 13 based on the URL information.

In a case where the structure of the corrupted file is the structure of FIG. 2, the recovery unit 35 replaces the dummy data of the file_data with uncorrupted broadcast data of the file for recovery corresponding to the dummy data to recover the corrupted data. On the other hand, in a case where the structure of the corrupted file is the structure of FIG. 3, the recovery unit 35 inserts broadcast data not in the file_data of the file for recovery into the file_data to recover the corrupted data.

### (Example of Syntax and Semantics of Partially Corrupted File Box)

FIG. 6 is a diagram depicting an example of syntax of the Partially Corrupted File Box, and FIG. 7 is a diagram depicting an example of semantics.

As depicted in FIG. 6, "version" and "flags" are described in the Partially Corrupted File Box. As depicted in FIG. 7, the "version" is information indicating a version of the Partially Corrupted File Box. The "flags" include a PCFB_BYTES_REMOVED flag, an All_Corrupted_Data_was_tried_to_recover flag, and a NOW_recovering flag.

The PCFB_BYTES_REMOVED flag is a flag provided with a value in a least significant bit of the flags, indicating whether there is dummy data in the file_data. The PCFB_BYTES_REMOVED flag is 1 where the flag indicates that there is no dummy data in the file_data and is 0 where there is dummy data in the file_data. Therefore, the PCFB_BYTES_REMOVED flag is set to 1 where the structure of the corrupted file is the structure of FIG. 3, and the PCFB_BYTES_REMOVED flag is set to 0 where the structure of the corrupted file is the structure of FIG. 2.

The All_Corrupted_Data_was_tried_to_recover flag is a flag provided with a value in a second bit from the bottom of the flags, indicating whether the recovery of all corrupted data of the file_data is completed at least once. The flag is a piece of the recovery information. The All_Corrupted_Data_was_tried_to_recover flag is 1 where the flag indicates that the recovery of all corrupted data of the file_data is completed at least once and is 0 where the flag indicates that the recovery is not completed yet.

The NOW_recovering flag is a flag provided with a value in a third bit from the bottom of the flags, indicating whether all corrupted data of the file_data is being recovered. The flag is a piece of the recovery information. The NOW_recovering flag is 1 where the flag indicates that all corrupted data of the file_data is being recovered and is 0 where the flag indicates that all corrupted data of the file_data is not being recovered.

In this way, in a case where the recovery of all corrupted data of the file_data is not yet started, the All_Corrupted_Data_was_tried_to_recover flag and the NOW_recovering flag are set to 0. In addition, in a case where the recovery of all corrupted data of the file_data is started, but the data is still being recovered, the All_Corrupted_Data_was_tried_to_recover flag is set to 0, and the NOW_recovering flag is set to 1. Further, in a case where the recovery of all corrupted data of the file_data is completed at least once, the All_Corrupted_Data_was_tried_to_recover flag is set to 1, and the NOW_recovering flag is set to 0.

As depicted in FIG. 6, entry_count and num_of_recovered are also described in the Partially Corrupted File Box. As depicted in FIG. 7, the entry_count denotes the number of pieces of corrupted data of the file_data. The num_of_recovered is information indicating the number of pieces of recovered corrupted data and is a piece of the recovery information.

Therefore, where the num_of_recovered is 0, the All_Corrupted_Data_was_tried_to_recover flag and the NOW_recovering flag of the flags are 0. In addition, in a case where the num_of_recovered is not 0 and is smaller than the entry_count, the All_Corrupted_Data_was_tried_to_recover flag of the flags is 0, and the NOW_recovering flag is 1. Further, in a case where the num_of_recovered is the same as the entry_count, the All_Corrupted_Data_was_tried_to_recover flag of the flags is 1, and the NOW_recovering flag is 0.

As depicted in FIG. 6, an entry is generated in the Partially Corrupted File Box for each piece of corrupted data of the file_data, and byte_offset and corrupted_size of each entry are sequentially described as corruption information in order from the top entry. As depicted in FIG. 7, the byte_offset is offset information of an amount of offset from the top of the file_data, indicating a start position of the corrupted data. The bit length of the offset information is 64 bits where the "version" is 1, and the bit length is 32 bits where the "version" is not 1. Also, the corrupted_size is information indicating a size of the corrupted data.

Note that the recovery is sequentially performed from the corrupted data corresponding to the top entry. Therefore, it can also be stated that the num_of_recovered is information indicating the order of the entry from the top, the entry corresponding to the most recently recovered corrupted data.

According to the configuration of the Partially Corrupted File Box described in FIGS. 6 and 7, the recovery unit 35 can recognize whether the recovery of the file to be recovered is unexecuted, is being executed, or is completed based on the flags of the file to be recovered. Furthermore, in a case where the recovery of the file to be recovered is paused in the middle, the recovery unit 35 can resume the recovery from the paused position based on the entry_count of the file to be recovered.

### (Description of Process by Reception Apparatus)

FIG. 8 is a flow chart describing a file generation process by the reception apparatus 12 of FIG. 1. The file generation process is started when a file of broadcast data is transmitted from the broadcasting station 11.

In step S11 of FIG. 8, the broadcast reception unit 31 of the reception apparatus 12 receives a file of broadcast data transmitted from the broadcasting station 11 through an antenna or the like not depicted and supplies the file to the file generation unit 32.

In step S12, the file generation unit 32 determines whether there is corrupted data in the file of the broadcast data supplied from the broadcast reception unit 31.

If the file generation unit 32 determines that there is corrupted data in the file of the broadcast data in step S12, the file generation unit 32 uses a method called Partial File Storage to generate a corrupted file from the broadcast data in step S13.

In step S14, the setting unit 33 sets a default value of recovery information in the Partially Corrupted File Box of the corrupted file generated by the file generation unit 32. Note that the default value of the recovery information is 0.

In step S15, the setting unit 33 supplies and records the corrupted file provided with the default value of the recovery information in the recording unit 34. The process then ends.

On the other hand, if the file generation unit 32 determines that there is no corrupted data in the file of the broadcast data in step S12, the file generation unit 32 generates an uncorrupted file from the broadcast data in step S16.

In step S17, the file generation unit 32 supplies and records the uncorrupted file in the recording unit 34. The process then ends.

FIG. 9 is a flow chart describing a file recovery process by the reception apparatus 12 of FIG. 1. The file recovery process is started when, for example, the recovery unit 35 selects, as a file to be recovered, one of the corrupted files recorded in the recording unit 34.

In step S31 of FIG. 9, the recovery unit 35 of the reception apparatus 12 reads the Partial File Container Box of the file to be recovered recorded in the recording unit 34. In step S32, the recovery unit 35 acquires the Partially Corrupted File Box from the Partial File Container Box read in step S31.

In step S33, the recovery unit 35 acquires the flags from the Partially Corrupted File Box acquired in step S32.

In step S34, the recovery unit 35 determines whether the All_Corrupted_Data_was_tried_to_recover flag is set to 1 based on the flags, that is, whether 1 is set in the second bit from the bottom of the flags.

If the recovery unit 35 determines that the All_Corrupted_Data_was_tried_to_recover flag is set to 1 in step S34, that is, if the recovery of all corrupted data of the file to be recovered is completed at least once, the process ends.

On the other hand, if the recovery unit 35 determines that the All_Corrupted_Data_was_tried_to_recover flag is not set to 1 in step S34, that is, if the recovery of all corrupted data of the file to be recovered is not yet completed once, the process proceeds to step S35.

In step S35, the recovery unit 35 determines whether the NOW_recovering flag is set to 1 based on the flags, that is, whether 1 is set in the third bit from the bottom of the flags.

If the recovery unit 35 determines that the NOW_recovering flag is set to 1 in step S35, that is, if the recovery of all corrupted data of the file to be recovered is paused in the middle, the process proceeds to step S36.

In step S36, the recovery unit 35 acquires the num_of_recovered from the Partially Corrupted File Box acquired in step S32 and proceeds the process to step S37.

On the other hand, if the recovery unit 35 determines that the NOW_recovering flag is not set to 1 in step S35, that is, if the recovery of all corrupted data of the file to be recovered is not yet started, the recovery unit 35 recognizes that the num_of_recovered is 0. The process then proceeds to step S37.

Although the recovery unit 35 is configured to recognize that the num_of_recovered is 0 if the recovery unit 35 determines that the NOW_recovering flag is not set to 1 in step S35 in the example of FIG. 9, the recovery unit 35 may be configured to acquire 0 for the num_of_recovered from the Partially Corrupted File Box.

In step S37, the recovery unit 35 acquires the Original Source URL Box from the read Partial File Container Box.

In step S38, the recovery unit 35 executes a corrupted data recovery process of sequentially recovering the corrupted data of the file to be recovered. Details of the corrupted data recovery process will be described with reference to FIG. 10 described later.

FIG. 10 is a flow chart describing the details of the corrupted data recovery process in step S38 of FIG. 9.

In step S51 of FIG. 10, the recovery unit 35 sets a count value i to a value obtained by adding 1 to the acquired or recognized num_of_recovered. In step S52, the recovery unit 35 determines whether the count value i is equal to or smaller than the entry_count included in the Partially Corrupted File Box.

If the recovery unit 35 determines that the count value is equal to or smaller than the entry_count in step S52, that is, if the recovery of all corrupted data of the file to be recovered is not yet completed, the recovery unit 35 decides the corrupted data corresponding to an i-th entry from the top of the Partially Corrupted File Box as a data to be recovered.

In step S53, the recovery unit 35 supplies the URL information described in the Original Source URL Box to the HTTP reception unit 36 to acquire, through the HTTP reception unit 36, data for recovery that is broadcast data corresponding to the i-th entry of the file for recovery held by the HTTP server 13. In step S54, the recovery unit 35 recovers the data to be recovered corresponding to the entry based on the corruption information of the i-th entry from the top described in the Partially Corrupted File Box and based on the data for recovery. The recovery unit 35 then supplies the count value i as recovered information to the setting unit 33.

In step S55, the recovery unit 35 determines whether to stop the corrupted data recovery process. If the recovery unit 35 determines not to stop the corrupted data recovery process in step S55, the recovery unit 35 increments the count value by 1 in step S56. The process then returns to step S52.

On the other hand, if the recovery unit 35 determines to stop the corrupted data recovery process in step S55, the process proceeds to step S57. In step S57, the setting unit 33 sets (updates) the NOW_recovering flag of the file to be recovered recorded in the recording unit 34 to 1 and proceeds the process to step S59.

Further, if the recovery unit 35 determines that the count value is greater than the entry_count in step S52, that is, if the recovery of all corrupted data is completed, the process proceeds to step S58. In step S58, the setting unit 33 sets the All_Corrupted_Data_was_tried_to_recover flag of the file to be recovered recorded in the recording unit 34 to 1 and sets the NOW_recovering flag to 0. The process then proceeds to step S59.

In step S59, the setting unit 33 sets the count value i indicated by the recovered information supplied from the recovery unit 35 in the num_of_recovered of the file to be recovered recorded in the recording unit 34. The process then returns to step S38 of FIG. 9, and the process ends.

As described, since the reception apparatus 12 sets the recovery information of the corrupted file, the reception apparatus 12 can easily recognize the state of the recovery of the corrupted file at the recovery of the corrupted file. Therefore, in a case where the reception apparatus 12 resumes the recovery of the corrupted file paused in the middle, the reception apparatus 12 can appropriately resume the recovery from the paused position without recovering the recovered data again or recovering many times the data failed to recover. As a result, the load of the recovery process of the file is reduced.

On the other hand, in a case where the recovery information is not set, the reception apparatus can execute a process, such as updating the entry_count or deleting the corruption information, at the same time as the recovery to thereby recognize the state at the time of the pause of the recovery when resuming the recovery. However, the process is cumbersome, and the size of the Partially Corrupted File Box is changed as a result of the process. Therefore, rewriting or the like of the data following the Partially Corrupted File Box is necessary. Therefore, the load of the recovery process of the file is large.

### <Second Embodiment>

### (Example of Syntax and Semantics of Partially Corrupted File Box)

A second embodiment of the information processing system according to the present disclosure is the same as the first embodiment except that, in addition to the recovery information, recovery result information indicating whether the recovery of each piece of corrupted data has succeeded or failed is supplied from the recovery unit 35 to the setting unit 33 in place of the recovered information. Therefore, the components of FIG. 1 will be used as components of the second embodiment of the information processing system, and only a process related to the recovery information and the recovery result information will be described hereinafter.

FIG. 11 is a diagram depicting an example of syntax of the Partially Corrupted File Box according to the second embodiment, and FIG. 12 is a diagram depicting an example of semantics.

The configuration of the Partially Corrupted File Box of FIGS. 11 and 12 is different from the configuration of FIGS. 6 and 7 in that the flags include only the PCFB_BYTES_REMOVED flag, the num_of_recovered is not described, and recovered_flag is newly described for each entry. Therefore, the recovery information in the second embodiment includes the flags and the recovered_flag instead of the num_of_recovered.

The recovered_flag of each entry is a flag indicating a state in which the recovery of the corrupted data corresponding to the entry has succeeded, a state in which the recovery has failed, or a state in which the recovery is not performed, and the recovered_flag is recovery information. The recovered_flag includes a Recovered flag and a Failed_to_recover flag.

As depicted in FIG. 12, the Recovered flag is a flag provided with a value in the least significant bit of the recovered_flag, indicating whether the recovery has succeeded. The Recovered flag is 1 where the flag indicates that the recovery has succeeded and is 0 where the flag indicates that the recovery has not succeeded.

The Failed_to_recover flag is a flag provided with a value in the second bit from the bottom of the recovered_flag, indicating whether the recovery has failed. The Failed_to_recover flag is 1 where the flag indicates that the recovery has failed and is 0 where the flag indicates that the recovery has not failed.

Therefore, where the Recovered flag and the Failed_to_recover flag are 0, it indicates the state in which the recovery is not performed. Thus, the default value of the recovery information is 0.

According to the configuration of the Partially Corrupted File Box described in FIGS. 11 and 12, the recovery unit 35 can recognize whether the recovery of the corrupted data corresponding to each entry of the file to be recovered is executed and whether the recovery has succeeded based on the recovered_flag of the entry.

### (Description of Process by Reception Apparatus)

A file generation process according to the second embodiment is similarly to the file generation process of FIG. 8, and the description will not be repeated.

FIG. 13 is a flow chart describing a file recovery process by the reception apparatus 12 according to the second embodiment.

The process of steps S71 and S72 in FIG. 13 is similarly to the process of steps S31 and S32 in FIG. 9, and the description will not be repeated. The process of step S73 is similarly to the process of step S37 in FIG. 9, and the description will not be repeated.

In step S74, the recovery unit 35 of the reception apparatus 12 sets the count value i to 1. In step S75, the recovery unit 35 acquires the recovered_flag of the i-th entry from the top, described in the Partially Corrupted File Box acquired in step S72.

In step S76, the recovery unit 35 determines whether the recovered_flag acquired in step S75 is 0, that is, whether the Recovered flag and the Failed_to_recover flags are 0.

If the recovery unit 35 determines that the recovered_flag is 0 in step S76, that is, if the recovery is not yet performed for the corrupted data corresponding to the i-th entry, the recovery unit 35 decides the corrupted data corresponding to the i-th entry as data to be recovered.

In step S77, the recovery unit 35 then supplies the URL information described in the Original Source URL Box to the HTTP reception unit 36 to acquire, through the HTTP reception unit 36, data for recovery that is the broadcast data corresponding to the i-th entry of the file for recovery held by the HTTP server 13. In step S78, the recovery unit 35 recovers the data to be recovered corresponding to the entry based on the corruption information and the data for recovery of the i-th entry.

In step S79, the recovery unit 35 determines whether the recovery in step S78 has succeeded. For example, in a case where there is no file for recovery in the HTTP server 13 corresponding to the URL information described in the Original Source URL Box, and the acquisition of file for recovery has failed in step S77, the recovery unit 35 determines that the recovery has not succeeded.

If the recovery unit 35 determines that the recovery has succeeded in step S79, the recovery unit 35 supplies the setting unit 33 with recovery result information indicating that the recovery of the data to be recovered corresponding to the i-th entry has succeeded.

In step S80, the setting unit 33 then sets the Recovered flag of the i-th entry of the file to be recovered recorded in the recording unit 34 to 1 and proceeds the process to step S82.

On the other hand, if the recovery unit 35 determines that the recovery has not succeeded in step S79, the recovery unit 35 supplies the setting unit 33 with recovery result information indicating that the recovery of the data to be recovered corresponding to the i-th entry has failed.

In step S81, the setting unit 33 sets the Failed_to_recover flag of the i-th entry of the file to be recovered recorded in the recording unit 34 to 1 and proceeds the process to step S82.

If the recovery unit 35 determines that the recovered_flag is not 0 in step S76, that is, if the recovery is already performed for the corrupted data corresponding to the i-th entry, the process proceeds to step S82.

In step S82, the recovery unit 35 determines whether to stop the file recovery process. If the recovery unit 35 determines not to stop the file recovery process in step S82, the process proceeds to step S83. In step S83, the setting unit 33 increments the count value i by 1.

In step S84, the setting unit 33 determines whether the count value i is equal to or smaller than the entry_count described in the Partially Corrupted File Box. If the setting unit 33 determines that the count value i is equal to or smaller than the entry_count in step S84, the process returns to step S75, and the subsequent process is repeated.

On the other hand, if the recovery unit 35 determines to stop the file recovery process in step S82, the process ends. Also, if the setting unit 33 determines that the count value i is greater than the entry_count in step S84, that is, if all of the corrupted data is recovered, the process ends.

As described, the recovery information in the second embodiment is information indicating the state in which the recovery of each piece of corrupted data has succeeded, the state in which the recovery has failed, or the state in which the recovery is not performed. Therefore, the reception apparatus 12 can recognize not only whether the recovery of each piece of corrupted data is executed, but also whether the recovery has succeeded.

### <Third Embodiment>

### (Example of Syntax of Partially Corrupted File Box)

A third embodiment of the information processing system according to the present disclosure is a combination of the first embodiment and the second embodiment. More specifically, the recovery information includes the flags, the num_of_recovered, and the recovered_flag, and the recovered information and the recovery result information are supplied from the recovery unit 35 to the setting unit 33 in the third embodiment. Therefore, the components of FIG. 1 will be used as components of the third embodiment of the information processing system, and only a process related to the recovery information, the recovered information, and the recovery result information will be described hereinafter.

FIG. 14 is a diagram depicting an example of syntax of the Partially Corrupted File Box according to the third embodiment.

The configuration of the Partially Corrupted File Box of FIG. 14 is different from the configuration of FIG. 6 in that recovered_flag is newly described for each entry.

### (Description of Process by Reception Apparatus)

A file generation process in the third embodiment is similarly to the file generation process of FIG. 8, and the description will not be repeated. In addition, a file recovery process in the third embodiment is similarly to the file recovery process of FIG. 9 except for a corrupted data recovery process of step S38, and only the corrupted data recovery process will be described hereinafter.

FIG. 15 is a flow chart describing the corrupted data recovery process by the reception apparatus 12 according to the third embodiment.

A process of steps S100 to S103 of FIG. 15 is similarly to the process of steps S51 to S54 of FIG. 10, and a process of steps S104 to S106 is similarly to the process of steps S79 to S81 of FIG. 13. A process of steps S107 to S111 is similarly to the process of steps S55 to S59 of FIG. 10.

<Fourth Embodiment>

### (First Structure Example of Corrupted File)

A fourth embodiment of the information processing system according to the present disclosure is the same as the third embodiment except that the recovery information is set in a new Box different from the Partially Corrupted File Box. Therefore, the components of FIG. 1 will be used as components of the fourth embodiment of the information processing system, and only a structure of the corrupted file will be described hereinafter.

FIG. 16 is a diagram depicting a first structure example of the corrupted file according to the fourth embodiment.

The structure of the corrupted file of FIG. 16 is different from the structure of FIG. 2 in that the recovery information is not described in the Partially Corrupted File Box, and the corrupted file includes two Boxes: the Partial File Container Box; and a Recovery Status Box provided with the recovery information.

The syntax of the Partially Corrupted File Box of FIG. 16 is the same as the syntax of FIG. 6 except that the flags include only a PCFB_BYTES_REMOVED flag, and the num_of_recovered is not arranged. Therefore, the description will not be repeated.

The Recovery Status Box is a Box in the same level as the Partial File Container Box.

### (Second Structure Example of Corrupted File)

FIG. 17 is a diagram depicting a second structure example of the corrupted file according to the fourth embodiment.

A structure of the corrupted file of FIG. 17 is different from the structure of FIG. 16 in that the Recovery Status Box is arranged in the Partial File Container Box.

In this way, the recovery information is arranged in a Box different from the Partially Corrupted File Box in the fourth embodiment, and the recovery information can be easily set.

Although not illustrated, the dummy data may not be arranged in the file_data in the corrupted files of FIGS. 16 and 17 as in the case of FIG. 3.

### (Example of Syntax of Partial File Container Box)

FIG. 18 is a diagram depicting an example of syntax of the Partial File Container Box of FIG. 17.

The syntax of the Partial File Container Box of FIG. 18 is the same as the syntax of FIG. 4 except that a Recovery Status Box is newly arranged.

### (First Example of Syntax of Recovery Status Box)

FIG. 19 is a diagram depicting a first example of the syntax of the Recovery Status Box of FIGS. 16 and 17.

The flags, the entry_count, and the num_of_recovered are described in the Recovery Status Box of FIG. 19. In the Recovery Status Box, the recovered_flag is also described for each entry. Therefore, the number of recovered_flags described in the Recovery Status Box is the entry_count.

### (Second Example of Syntax of Recovery Status Box)

FIG. 20 is a diagram depicting a second example of the syntax of the Recovery Status Box of FIGS. 16 and 17.

The syntax of the Recovery Status Box of FIG. 20 is different from the syntax of FIG. 19 in that the entry_count is not described, and only the recovered_flag of the recovered corrupted data in the corrupted data of the file_data is arranged.

In the Recovery Status Box of FIG. 20, since only the recovered_flag of the recovered corrupted data in the corrupted data of the file_data is arranged, the number of recovered_flags is the num_of_recovered instead of the entry_count. Therefore, in a case where the recovery of all of the corrupted data is not completed, the data size of the Recovery Status Box of FIG. 20 is smaller than the data size of the Recovery Status Box of FIG. 19 in which the number of recovered_flags is the entry_count.

Furthermore, one of the Recovered flag and the Failed_to_recover flag of the recovered_flag is always set to 1 in the case of FIG. 20. Therefore, the recovered_flag is not 0 which indicates the state that the recovery is not performed.

Although the recovery information of the third embodiment is set in a new Box different from the Partially Corrupted File Box in the fourth embodiment, the recovery information of the first embodiment or the second embodiment may be set in a new Box different from the Partially Corrupted File Box.

### <Fifth Embodiment>

### (Description of Process by File Generation Unit)

A fifth embodiment of the information processing system according to the present disclosure is the same as the configuration of the first to fourth embodiments except that where the files of the broadcast data are files in compliance with MPEG-DASH, the file generation unit 32 sets corrupted file information for specifying a corrupted file in an MPD (Media Presentation Description) file among the files, and the setting unit 33 also sets the recovery information in the MPD file. Therefore, the components of FIG. 1 will be used as components of the fifth embodiment of the information processing system, and only a process related to the MPD file will be described hereinafter.

FIG. 21 is a diagram describing the process by the file generation unit 32 according to the fifth embodiment.

As depicted in FIG. 21, in a case where the files of the broadcast data are files in compliance with MPEG-DASH, the files are segmented, and the files include one Initialization Segment file, one or more (n in the example of FIG. 21) Media Segment files, and an MPD file not depicted. Note that in a case where the Initialization Segment file and the Media Segment files do not have to be particularly distinguished, the files will be collectively referred to as Segment files.

The file generation unit 32 determines whether there is corrupted data in the Segment files supplied from the broadcast reception unit 31.

As depicted in FIG. 21, if the file generation unit 32 determines that there is corrupted data in an x-th Media Segment file (Media Segment x) from the top, the file generation unit 32 generates a corrupted file from the broadcast data of the Media Segment File.

Although the corrupted file is generated as in the first to third embodiments in the example of FIG. 21, the corrupted file including the Recovery Status Box may be generated as in the fourth embodiment.

Also, if the file generation unit 32 determines that there is no corrupted data in the Segment files other than the x-th Media Segment file from the top, the file generation unit 32 sets the segment files as uncorrupted files. The file generation unit 32 supplies and records the generated corrupted file and uncorrupted files in the recording unit 34.

### (Description of First Configuration Example of MPD File)

FIG. 22 is a diagram depicting a first configuration example of the MPD file provided with the corrupted file information and the recovery information.

The MPD file is a file for managing the Segment files, and hierarchical information, such as encoding information (Configuration information) of broadcast data, size of image, and language of speech, is formed in the MPD file. The MPD file is described in an XML format.

As depicted in A of FIG. 22, the hierarchy in the MPD file is formed by using elements, such as period (Period), adaptation set (AdaptationSet), and representation (Representation).

In the MPD file, the broadcast data stored in the Segment files managed by itself is divided in a predetermined time range. The period element is described for each of the divided broadcast data. The adaptation set element is included in the period element, and the adaptation set element groups the representation elements of the broadcast data corresponding to the period element. The representation elements are grouped by the type of broadcast data (image and speech in the example of A of FIG. 22) or the like. The representation elements include the URL information and the like of the acquisition source of the divided broadcast data.

In a case where the file generation unit 32 acquires the MPD file of A of FIG. 22 from the broadcast reception unit 31, and there is corrupted data in at least one of the Segment files, the file generation unit 32 sets <EssentialProperty schemeIdUri="urn:mpeg:dash:corrupted:2015"> depicted in B of FIG. 22 at the position of one of (1) to (4) of the MPD file in A of FIG. 22.

The <EssentialProperty schemeIdUri="urn:mpeg:dash:corrupted:2015"> is EssentialProperty indicating that at least one of the Segment files corresponding to the representation elements included in the element including this is a corrupted file.

For example, in a case where the <EssentialProperty schemeIdUri="urn:mpeg:dash:corrupted:2015"> is set at the position of (1) or (2) in A of FIG. 22, at least one of the Segment files (video.mp4, audio.mp4) managed by the MPD file corresponding to the representation elements included in the element including this is a corrupted file. Further, in a case where the <EssentialProperty schemeIdUri="urn:mpeg:dash:corrupted:2015"> is set at the position of (3) or (4) in A of FIG. 22, the Segment file (video.mp4) corresponding to the representation element included in the element including this is a corrupted file.

In addition, the file generation unit 32 and the setting unit 33 set <EssentialProperty schemeIdUri="urn:mpeg:dash:corrupted:segment:2015" value="file_recovered_status_flag,file_name"> depicted in B of FIG. 22 for each corrupted file, at the position of one of (1) to (4) of the MPD file in A of FIG. 22.

Specifically, the <EssentialProperty schemeIdUri="urn:mpeg:dash:corrupted:segment:2015" value="file_recovered_status_flag,file_name"> is EssentialProperty indicating the recovery information and the corrupted file information of the corrupted file among the Segment files corresponding to the representation elements included in the element including this.

More specifically, the file_name is information as corrupted file information indicating the file name of the corrupted file as depicted in FIG. 23. The file_recovered_status_flag includes the All_Corrupted_data_was_tired_to_recover flag and the NOW_recovering flag as recovery information of the corrupted file.

The file generation unit 32 sets the <EssentialProperty schemeIdUri="urn:mpeg:dash:corrupted:segment:2015" value="file_recovered_status_flag,file_name"> of each corrupted file at the position of one of (1) to (4) of the acquired MPD file in A of FIG. 22. The file generation unit 32 sets the file_name of each corrupted file as the file_name of the <EssentialProperty schemeIdUri="urn:mpeg:dash:corrupted:segment:2015" value="file_recovered_status_flag,file_name">.

Note that in a case where there is one Segment file corresponding to the representation element including the <EssentialProperty schemeIdUri="urn:mpeg:dash:corrupted:segment:2015" value="file_recovered_status_flag,file_name"> (where <EssentialProperty schemeIdUri="urn:mpeg:dash:corrupted:segment:2015" value="file_recovered_status_flag,file_name"> is set in (3) or (4) in the example of FIG. 22), the corrupted file is uniquely determined, and the file_name may not be set.

The setting unit 33 sets 0 as a default value in the file_recovered_status_flag of <EssentialProperty schemeIdUri="urn:mpeg:dash:corrupted:segment:2015" value="file_recovered_status_flag,file_name"> of each corrupted file. In addition, the setting unit 33 updates not only the recovery information set in the corrupted files recorded in the recording unit 34, but also the recovery information set in the MPD file based on the recovered information supplied from the recovery unit 35.

### (Description of Second Configuration Example of MPD File)

FIG. 24 is a diagram depicting a second configuration example of the MPD file provided with the corrupted file information and the recovery information.

In the example of FIG. 24, in a case where there is corrupted data in at least one of the Segment files supplied from the broadcast reception unit 31, the file generation unit 32 uses a method called Partial File Storage to encapsulate the MPD file supplied from the broadcast reception unit 31 as depicted in A of FIG. 24.

Specifically, the file generation unit 32 stores the MPD file supplied from the broadcast reception unit 31 in an Original MPD element and stores the Original MPD element in an Encapsulated MPD element. Therefore, the recovery unit 35 can recognize whether at least one of the Segment files managed by the MPD file is a corrupted file based on whether there is an Encapsulated MPD element in the MPD file.

The file generation unit 32 sets <PartialFile schemeIdUri="urn:mpeg:dash:corrupted:2015"> depicted in B of FIG. 24 at the position of (1) of the MPD file in A of FIG. 24. The <PartialFile schemeIdUri="urn:mpeg:dash:corrupted:2015"> indicates that at least one of the Segment files managed by the MPD file is a corrupted file.

The file generation unit 32 and the setting unit 33 also set <PartialFile schemeIdUri="urn:mpeg:dash:corrupted:segment:2015" value="file_recovered_status_flag,file_name"> depicted in B of FIG. 24 for each corrupted file, at the position of (1) of the MPD file in A of FIG. 24.

Specifically, the <PartialFile schemeIdUri="urn:mpeg:dash:corrupted:segment:2015" value="file_recovered_status_flag,file_name"> indicates the recovery information and the corrupted file information of the corrupted file among the segment files managed by the MPD file.

The file generation unit 32 sets the <PartialFile schemeIdUri="urn:mpeg:dash:corrupted:segment:2015" value="file_recovered_status_flag,file_name"> of each corrupted file at (1) of the acquired MPD file in A of FIG. 24. The file generation unit 32 sets the file_name of each corrupted file as the file_name of the <PartialFile schemeIdUri="urn:mpeg:dash:corrupted:segment:2015" value="file_recovered_status_flag,file_name">.

The setting unit 33 sets 0 as a default value in the file_recovered_status_flag of the <PartialFile schemeIdUri="urn:mpeg:dash:corrupted:segment:2015" value="file_recovered_status_flag,file_name"> of each corrupted file. In addition, the setting unit 33 updates not only the recovery information set in the corrupted files recorded in the recording unit 34, but also the recovery information set in the MPD file based on the recovered information supplied from the recovery unit 35.

In this way, the MPD file is encapsulated in the example of FIG. 24, and an existing reproduction apparatus not corresponding to the recovery cannot understand the MPD file. This can prevent reproduction of the corrupted file in such a reproduction apparatus.

In the fifth embodiment, the corrupted file information and the recovery information are set in the MPD file. Therefore, the recovery unit 35 can just acquire the MPD file to recognize the corrupted file for which the completion of recovery is not completed, the corrupted file recorded in the recording unit 34. Therefore, the recovery unit 35 can recover the corrupted file for which the recovery is not completed, without needlessly reading a corrupted file for which the recovery is completed.

In addition, the reproduction apparatus that reproduces the corrupted file recorded in the recording unit 34 can just acquire the MPD file to recognize the corrupted file for which the recovery is completed. Therefore, the reproduction apparatus can reproduce the corrupted file for which the recovery is completed, without needlessly reading a corrupted file for which the recovery is not completed.

### <Sixth Embodiment>

### (Description of Process by File Generation Unit)

A sixth embodiment of the information processing system according to the present disclosure is the same as the fifth embodiment except that in a case where the file of the broadcast data is a file in compliance with MPEG-DASH, the setting unit 33 sets the recovery information in a Corrupted File Index file, and the file generation unit 32 sets Corrupted File Index file information for specifying the Corrupted File Index file in the MPD file instead of the corrupted file information or the recovery information. Therefore, the components of FIG. 1 will be used as components of the sixth embodiment of the information processing system, and only a process related to the Corrupted File Index file and the MPD file will be described hereinafter.

FIG. 25 is a diagram describing the process by the file generation unit 32 according to the sixth embodiment.

The file generation unit 32 determines whether there is corrupted data in the Segment files supplied from the broadcast reception unit 31 as in the fifth embodiment. As depicted in FIG. 25, if the file generation unit 32 determines that there is corrupted data in x-th and y-th Media Segment files (Media Segment x, Media Segment y) from the top, the file generation unit 32 generates corrupted files from the broadcast data of the Media Segment files.

Although the corrupted files in the configuration of FIG. 17 are generated in the example of FIG. 25, the corrupted files provided with the recovery information in the Partially Corrupted File Box may be generated as in the first to third embodiments. The corrupted files provided with the recovery information in the Recovery Status Box different from the Partial File Container Box may also be generated as depicted in FIG. 16.

If the file generation unit 32 determines that there is no corrupted data in the Segment files other than the x-th and y-th Media Segment files from the top, the file generation unit 32 sets the Segment files as uncorrupted files. The file generation unit 32 supplies and records the generated corrupted files and uncorrupted files in the recording unit 34.

The file generation unit 32 further generates a new Corrupted File Index file different from the files of the broadcast data. The setting unit 33 sets the recovery information of each corrupted file as File Recovery Status Box in the generated Corrupted File Index file.

### (Example of Syntax of File Recovery Status Box)

FIG. 26 is a diagram depicting an example of syntax of the File Recovery Status Box.

In the Corrupted File Index file, the File Recovery Status Box is provided for each corrupted file. As depicted in FIG. 26, file_name, file_recovered_status_flag, and Recovery Status Box are described in the File Recovery Status Box.

Note that the Recovery Status Box may not be arranged in the File Recovery Status Box. In a case where the Recovery Status Box is arranged in the File Recovery Status Box, the Recovery Status Box may not be arranged in the corrupted file.

### (Description of Configuration Example of MPD File)

FIG. 27 is a diagram depicting a configuration example of the MPD file provided with the Corrupted File Index file information.

In a case where the file generation unit 32 acquires the MPD file of A of FIG. 27 from the broadcast reception unit 31, and there is corrupted data in at least one of the Segment files, the file generation unit 32 sets information indicating the file name of the Corrupted File Index file as Corrupted File Index file information in the MPD file.

Specifically, the file generation unit 32 sets <EssentialProperty schemeIdUri="urn:mpeg:dash:corrupted:index:2015" value="file_name"> depicted in B of FIG. 27 at the position of (1) in A of FIG. 27.

The <EssentialProperty schemeIdUri="urn:mpeg:dash:corrupted:index:2015" value="file_name"> is EssentialProperty indicating that at least one of the Segment files managed by the MPD file is a corrupted file, and the file name of the Corrupted File Index file provided with the recovery information of the corrupted file is file_name.

Note that as in the fifth embodiment, <EssentialProperty schemeIdUri="urn:mpeg:dash:corrupted:segment:2015" value="file_recovered_status_flag,file_name"> may be described in the MPD file of the sixth embodiment. The MPD file of the sixth embodiment may also be encapsulated as in the fifth embodiment.

### <Seventh Embodiment>

### (Description of Process by File Generation Unit)

A seventh embodiment of the information processing system according to the present disclosure is the same as the sixth embodiment except that in a case where the files of the broadcast data are files in compliance with MPEG-DASH, the file provided with the recovery information is the Initialization Segment file instead of the Corrupted File Index file. Therefore, the components of FIG. 1 will be used as components of the seventh embodiment of the information processing system, and only a process related to the Initialization Segment file and the MPD file will be described hereinafter.

FIG. 28 is a diagram describing the process by the file generation unit 32 according to the seventh embodiment.

The file generation unit 32 determines whether there is corrupted data in the Segment files supplied from the broadcast reception unit 31 as in the sixth embodiment. As depicted in FIG. 28, if the file generation unit 32 determines that there is corrupted data in x-th and y-th Media Segment files (Media Segment x, Media Segment y) from the top, the file generation unit 32 generates corrupted files from the broadcast data of the Media Segment files.

The file generation unit 32 also generates a corrupted file from the Initialization Segment file regardless of whether there is corrupted data in the Initialization Segment file. The setting unit 33 sets the recovery information of all of the corrupted files as Segment Corrupted Information Box in the corrupted file (hereinafter, referred to as corrupted Initialization Segment file) generated from the Initialization Segment file. The file generation unit 32 supplies and records the generated corrupted files and uncorrupted files in the recording unit 34.

Although the corrupted files in the configuration of FIG. 17 are generated in the example of FIG. 28, the corrupted files provided with the recovery information in the Partially Corrupted File Box may be generated as in the first to third embodiments. The corrupted files provided with the recovery information in the Recovery Status Box different from the Partial File Container Box may also be generated as depicted in FIG. 16.

### (Configuration Example of Corrupted Initialization Segment File)

FIG. 29 is a diagram depicting a configuration example of the corrupted Initialization Segment file.

A configuration of the corrupted Initialization Segment file of FIG. 29 is the same as the configuration of the corrupted file of FIG. 18 except that Segment Corrupted Information Box is arranged.

### (Example of Syntax of Segment Corrupted Information Box)

FIG. 30 is a diagram depicting an example of syntax of the Segment Corrupted Information Box of FIG. 29.

As depicted in FIG. 30, File Recovery Status Box is arranged for each corrupted file in the Segment Corrupted Information Box.

The configuration of the MPD file in the seventh embodiment is different from the configuration of FIG. 27 except that <EssentialProperty schemeIdUri="urn:mpeg:dash:corrupted:index:initialization :2015"> is set at the position of (1) in A of FIG. 27 instead of <EssentialProperty schemeIdUri="urn:mpeg:dash:corrupted:index:2015" value="file_name">.

The <EssentialProperty schemeIdUri="urn:mpeg:dash:corrupted:index:initialization :2015"> is EssentialProperty indicating that at least one of the Segment files managed by the MPD file is a corrupted file, and the recovery information of the corrupted file is set in the Initialization Segment file.

Note that in the MPD file of the seventh embodiment, <EssentialProperty schemeIdUri="urn:mpeg:dash:corrupted:segment:2015" value="file_recovered_status_flag,file_name"> may be described as in the fifth embodiment. Also, the MPD file of the seventh embodiment may be encapsulated as in the fifth embodiment.

In this way, at the reproduction of the Media Segment file, the recovery information is set in the Initialization Segment file reproduced before the Media Segment file in the seventh embodiment. Therefore, the reproduction apparatus can recognize the recovery information of the Media Segment file before the reproduction of the Media Segment file.

### <Eighth Embodiment>

### (Configuration Example of Eighth Embodiment of Information Processing System)

FIG. 31 is a block diagram depicting a configuration example of an eighth embodiment of the information processing system according to the present disclosure.

Among the components depicted in FIG. 31, the same reference signs are provided to the same components as in FIG. 1. The overlapping description will be appropriately omitted.

The configuration of an information processing system 50 of FIG. 31 is different from the configuration of the information processing system 10 of FIG. 1 in that a cache proxy 51 and a player 52 are provided in place of the reception apparatus 12. In the information processing system 50, the cache proxy 51 receives and saves files of broadcast data in compliance with MPEG-DASH, and the player 52 reproduces the files saved in the cache proxy 51.

Specifically, the cache proxy 51 of the information processing system 50 is, for example, a household home server, and the cache proxy 51 includes the reception apparatus 12, a DASH server 61, and the like. The reception apparatus 12 receives and records the files of the broadcast data in compliance with MPEG-DASH transmitted from the broadcasting station 11 and recovers the corrupted data of the files. The DASH server 61 acquires and saves the corrupted files and the uncorrupted files recorded in the recording unit 34 of the reception apparatus 12 for which the recovery of all of the corrupted data is completed.

The player 52 includes a DASH client 71 and the like. The DASH client 71 (reproduction unit) reads the MPD file saved in the DASH server 61. The DASH client 71 refers to the MPD file to read necessary Segment files from the Dash server 61 and reproduces the acquired broadcast data based on the Segment files.

### <Ninth Embodiment>

### (Configuration Example of Ninth Embodiment of Information Processing System)

FIG. 32 is a block diagram depicting a configuration example of a ninth embodiment of the information processing system according to the present disclosure.

Among the components depicted in FIG. 32, the same reference signs are provided to the same components as in FIG. 1. The overlapping description will be appropriately omitted.

The configuration of an information processing system 100 of FIG. 32 is different from the configuration of the information processing system 50 of FIG. 31 in that a cache proxy 101 is provided in place of the cache proxy 51, and a player 102 is provided in place of a player 52. In the information processing system 100, the player 102 performs the recovery.

Specifically, the cache proxy 101 of the information processing system 100 is, for example, a household home server, and the cache proxy 101 includes the broadcast reception unit 31, the file generation unit 32, a setting unit 111, and a DASH sever 112. The setting unit 111 executes the process of setting the default value of the recovery information among the processes by the setting unit 33 of FIG. 1. The DASH server 112 records the uncorrupted files generated by the file generation unit 32 as well as the corrupted file and the MPD file, at least one of which is provided with the default value of the recovery information.

The player 102 includes the recording unit 34, the recovery unit 35, the HTTP reception unit 36, a DASH client 121, and a setting unit 122.

The DASH client 121 (reproduction unit) reads the MPD file recorded in the DASH server 112. The DASH client 121 refers to the MPD file to read necessary Segment files from the DASH server 112 and records the Segment files in the recording unit 34. The DASH client 121 reads the Segment files recorded in the recording unit 34 for which the recovery of all of the corrupted data is performed. The DASH client 121 acquires and reproduces the broadcast data based on the Segment files.

The setting unit 122 executes the process of updating the recovery information among the processes by the setting unit 33 of FIG. 1.

### <Tenth Embodiment>

### (Description of Computer according to Present Disclosure)

The series of processes by the reception apparatus 12 described above can be executed by hardware or can be executed by software. In a case where the series of processes are executed by software, a program constituting the software is installed on a computer. Here, examples of the computer include a computer incorporated into dedicated hardware and a general-purpose personal computer that can execute various functions by installing various programs.

FIG. 33 is a block diagram depicting a configuration example of hardware of a computer that uses a program to execute the series of processes by the reception apparatus 12 described above.

In a computer 200, a CPU (Central Processing Unit) 201, a ROM (Read Only Memory) 202, and a RAM (Random Access Memory) 203 are connected to each other by a bus 204.

An input-output interface 205 is further connected to the bus 204. An input unit 206, an output unit 207, a storage unit 208, a communication unit 209, and a drive 210 are connected to the input-output interface 205.

The input unit 206 includes a keyboard, a mouse, a microphone, and the like. The output unit 207 includes a display, a speaker, and the like. The storage unit 208 includes a hard disk, a non-volatile memory, and the like. The communication unit 209 includes a network interface and the like. The drive 210 drives a removable medium 211, such as a magnetic disk, an optical disk, a magnetooptical disk, and a semiconductor memory.

In the computer 200 configured in this way, the CPU 201 loads, on the RAM 203, a program stored in the storage unit 208 through the input-output interface 205 and the bus 204 and executes the program to execute the series of processes described above, for example.

The program executed by the computer 200 (CPU 201) can be provided by, for example, recording the program in the removable medium 211 as a package medium or the like. The program can also be provided through a wired or wireless transmission medium, such as a local area network, the Internet, and digital satellite broadcasting.

In the computer 200, the removable medium 211 can be mounted on the drive 210 to install the program on the storage unit 208 through the input-output interface 205. The program can also be received by the communication unit 209 through a wired or wireless transmission medium and installed on the storage unit 208. Furthermore, the program can be installed in advance in the ROM 202 or the storage unit 208.

Note that the program executed by the computer 200 may be a program for executing the processes in chronological order described in the present specification or may be a program for executing the processes in parallel or at a necessary timing such as when the program is invoked.

In the present specification, the system denotes a set of a plurality of constituent elements (such as apparatuses and modules (components)), and whether or not all of the constituent elements are in the same housing does not matter. Therefore, a plurality of apparatuses housed in separate housings and connected through a network and an apparatus including a plurality of modules housed in a housing are both systems.

Note that the advantageous effects described in the present specification are exemplary only and not limiting, and there can be other advantageous effects.

Further, the embodiments of the present disclosure are not limited to the embodiments described above, and various changes can be made without departing from the scope of the present disclosure.

For example, like description in the Segment Corrupted Information Box can be performed for the MPD file in the fifth embodiment.

Further, the present technique can be applied not only to an apparatus that receives broadcast data, but also to an apparatus (such as a portable terminal) that receives multicast data in compliance with LTE (Long Term Evolution), Wi-Fi, or the like.

Note that the present disclosure can also be configured as follows.

(1) An information processing apparatus including:
   a setting unit that sets recovery information indicating a state of recovery of corrupted data of a file in compliance with an ISO Base media file format; and
   a recovery unit that recovers the corrupted data based on the recovery information set by the setting unit.
(2) The information processing apparatus according to (1), in which
   the setting unit is configured to set the recovery information in a box different from a box provided with data of the file.
(3) The information processing apparatus according to (1), in which
   the setting unit is configured to set the recovery information in a box different from a box that is included in the box provided with the data of the file and that is provided with corruption information indicating a position and a size of the corrupted data.
(4) The information processing apparatus according to (1), in which
   the setting unit is configured to set the recovery information in the box provided with the corruption information indicating the position and the size of the corrupted data of the file.
(5) The information processing apparatus according to any one of (1) to (4), in which
   the setting unit is configured to set the recovery information in a management file for managing the file.
(6) The information processing apparatus according to (5), in which
   the management file is encapsulated.
(7) The information processing apparatus according to any one of (1) to (4), further including:
   a file generation unit that sets corrupted file information for specifying the file in the management file for managing the file.
(8) The information processing apparatus according to (7), in which
   the management file is encapsulated.
(9) The information processing apparatus according to (1), in which
   the setting unit is configured to set the recovery information in a recovery information file that is a file different from the file.
(10) The information processing apparatus according to (9), in which
   the setting unit is configured to set corrupted file specification information for specifying the file in the recovery information file.
(11) The information processing apparatus according to (9) or (10), further including:
   a file generation unit that sets information for specifying the recovery information file in the management file for managing the file.
(12) The information processing apparatus according to any one of (9) to (11), in which
   the recovery information file is an Initialization Segment file.
(13) The information processing apparatus according to any one of (1) to (12), in which
   the recovery information is information indicating that all of the corrupted data of the file is being recovered.
(14) The information processing apparatus according to any one of (1) to (13), in which
   the recovery information is information indicating that the recovery of all of the corrupted data of the file is completed.
(15) The information processing apparatus according to any one of (1) to (14), in which
   the recovery information is information indicating the corrupted data for which the recovery is performed by the recovery unit.
(16) The information processing apparatus according to any one of (1) to (15), in which
   the recovery information is information indicating a state in which the recovery of each piece of the corrupted data has succeeded, a state in which the recovery has failed, or a state in which the recovery is not performed.
(17) The information processing apparatus according to any one of (1) to (14), in which
   the recovery information is information indicating the corrupted data for which the recovery is performed by the recovery unit and information indicating whether the recovery of each piece of the corrupted data for which the recovery is performed has succeeded or failed.
(18) An information processing method executed by an information processing apparatus, the information processing method including:
   a setting step of setting recovery information indicating a state of recovery of corrupted data of a file in compliance with an ISO Base media file format; and
   a recovery step of recovering the corrupted data based on the recovery information set by a process of the setting step.
(19) An information processing apparatus including:
   a reproduction unit that reproduces a file in compliance with an ISO Base media file format, the file provided with recovery information indicating a state of recovery of corrupted data of the file.
(20) An information processing method executed by an information processing apparatus, the information processing method including:
   a reproduction step of reproducing a file in compliance with an ISO Base media file format, the file provided with recovery information indicating a state of recovery of corrupted data of the file.

### [Reference Signs List]

12 Reception apparatus, 32 File generation unit, 33 Setting unit, 35 Recovery unit, 71, 121 DASH client

## Claims

1. An information processing apparatus comprising:
a setting unit that sets recovery information indicating a state of recovery of corrupted data of a file in compliance with an ISO Base media file format; and
a recovery unit that recovers the corrupted data based on the recovery information set by the setting unit.

2. The information processing apparatus according to claim 1, wherein
the setting unit is configured to set the recovery information in a box different from a box provided with data of the file.

3. The information processing apparatus according to claim 1, wherein
the setting unit is configured to set the recovery information in a box different from a box that is included in the box provided with the data of the file and that is provided with corruption information indicating a position and a size of the corrupted data.

4. The information processing apparatus according to claim 1, wherein
the setting unit is configured to set the recovery information in the box provided with the corruption information indicating the position and the size of the corrupted data of the file.

5. The information processing apparatus according to claim 1, wherein
the setting unit is configured to set the recovery information in a management file for managing the file.

6. The information processing apparatus according to claim 5, wherein
the management file is encapsulated.

7. The information processing apparatus according to claim 1, further comprising:
a file generation unit that sets corrupted file information for specifying the file in the management file for managing the file.

8. The information processing apparatus according to claim 7, wherein
the management file is encapsulated.

9. The information processing apparatus according to claim 1, wherein
the setting unit is configured to set the recovery information in a recovery information file that is a file different from the file.

10. The information processing apparatus according to claim 9, wherein
the setting unit is configured to set corrupted file specification information for specifying the file in the recovery information file.

11. The information processing apparatus according to claim 9, further comprising:
a file generation unit that sets information for specifying the recovery information file in the management file for managing the file.

12. The information processing apparatus according to claim 9, wherein
the recovery information file is an Initialization Segment file.

13. The information processing apparatus according to claim 1, wherein
the recovery information is information indicating that all of the corrupted data of the file is being recovered.

14. The information processing apparatus according to claim 1, wherein
the recovery information is information indicating that the recovery of all of the corrupted data of the file is completed.

15. The information processing apparatus according to claim 1, wherein
the recovery information is information indicating the corrupted data for which the recovery is performed by the recovery unit.

16. The information processing apparatus according to claim 1, wherein
the recovery information is information indicating a state in which the recovery of each piece of the corrupted data has succeeded, a state in which the recovery has failed, or a state in which the recovery is not performed.

17. The information processing apparatus according to claim 1, wherein
the recovery information is information indicating the corrupted data for which the recovery is performed by the recovery unit and information indicating whether the recovery of each piece of the corrupted data for which the recovery is performed has succeeded or failed.

18. An information processing method executed by an information processing apparatus, the information processing method comprising:
a setting step of setting recovery information indicating a state of recovery of corrupted data of a file in compliance with an ISO Base media file format; and
a recovery step of recovering the corrupted data based on the recovery information set by a process of the setting step.

19. An information processing apparatus comprising:
a reproduction unit that reproduces a file in compliance with an ISO Base media file format, the file provided with recovery information indicating a state of recovery of corrupted data of the file.

20. An information processing method executed by an information processing apparatus, the information processing method comprising:
a reproduction step of reproducing a file in compliance with an ISO Base media file format, the file provided with recovery information indicating a state of recovery of corrupted data of the file.
